# EUROPEAN PATENT APPLICATION

(11) **EP 1 724 976 A1**
(43) Date of publication of application: **22.11.2006**
(21) Application number: 05704177.4
(22) Date of filing: 27.01.2005
(51) Int. Cl.: H04L 12/56

(54) **ADDRESS SOLVING APPARATUS, ADDRESS SOLVING METHOD, AND COMMUNICATION SYSTEM USING THE SAME**

(30) Priority: 17.02.2004 JP 2004040411
(71) Applicant: Ginganet Corporation, Tennoji-ku Osaka-shi Osaka 5430001 (JP)
(72) Inventor: SAHASHI, Nozomu c/o GINGANET CORPORATION, Kishiwada-shi Osaka 5960045 (JP); MURAKAMI, Naota, c/o GINGANET CORPORATION, Osaka-shi, Osaka 556-0017 (JP); KOBAYASHI, Kenji, c/o GINGANET CORPORATION, Osaka-shi, Osaka 556-0017 (JP)
(74) Representative: Schoppe, Fritz
(86) International application number: PCT/JP2005/001071
(87) International publication number: WO 2005/079023

(57) **Abstract**

An address resolution device provides seamless communications without being conscious of which address should be used for the communications when an opponent party is assigned both an external address and an internal address, and dynamically accommodates against changes in connection status.

A gate keeper 60 has an address table 62 with which global addresses (GA), private addresses (PA), and grouping IDs (GID) can be registered. During address registration, the gate keeper 60 registers the address of a communication packet into the global addresses, the address assigned to the terminal into the private addresses, and if available, a grouping ID into grouping IDs. During address notification, the gate keeper 60 consults the address table to notify the caller terminal of the callee terminal private addresses when the callee terminal and the caller terminal have the same grouping ID or when they have the same global address. Otherwise, the gate keeper notifies the caller terminal of the callee terminal global address.

## Description

### [TECHNICAL FIELD]

The present invention relates to a method and an apparatus for performing address resolutions to facilitate communications between terminals connected to a communication network, and to a communication system that includes the same. More particularly, the invention relates to a method and an apparatus for performing address resolutions which is suitable for establishing voice telephone calls or video telephone calls, e.g., over the Internet, and to a communication system including the same.

### [BACKGROUND ART]

In recent years, IP telephony (VoIP) or IP video telephony is increasingly used because voice telephone calls or Video telephone calls over the Internet can save significant communication costs. To provide interactive communications via such IP telephony or IP video telephony, it is necessary to identify the IP address of a called party to set up a call to the called party. However, since a typical user terminal is connected to the Internet via an ISP (Internet Service Provider), the terminal may be assigned a different IP address on every connection. Moreover, when user terminals are connected to a private communication network or a LAN which is connected to the Internet via a router, multiple internal addresses (referred to as private addresses) may be assigned for one external address (referred to as a global address). It is thus difficult to identify the callee.
According to the ITU-T recommendation H.323 protocol, for example, which is now being used for IP telephony or IP video telephony, a RAS (Registration Admission Status) function is included for performing address resolutions on user terminals in the call control protocol H.225.0 to overcome these difficulties. Each user terminal pre-registers its own address with an address resolution device (also referred to as a gate keeper) which is used on a network. When making a call to a callee terminal, a caller terminal inquires address information of the callee terminal to the gate keeper and then performs communications using the notified address information. (For example, the address translation device disclosed in Patent Document 1 interconnects between a LAN using private addresses and the Internet using global addresses.

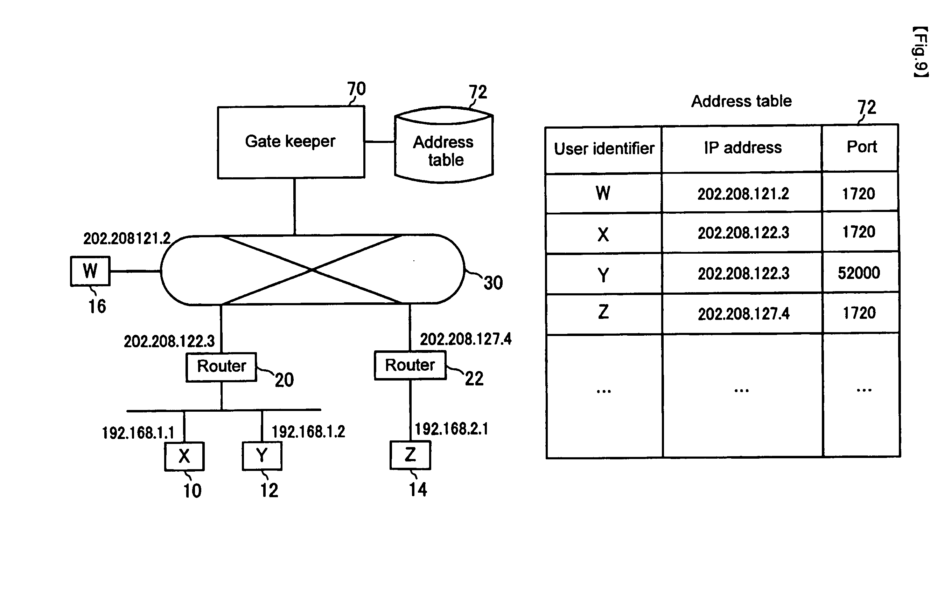

Fig. 9 illustrates the configuration of a communication system that uses a conventional address resolution device. In Fig. 9, numerals 10, 12, 14, and 16 indicate terminals which are used by users X, Y, Z, and W, respectively, numerals 20 and 22 indicate routers, numeral 30 indicates the Internet, and numeral 70 indicates a gate keeper.
In this configuration, the terminals 10 and 12 are connected to a LAN, and each is assigned a unique private address (i.e., 192.168.1.1 and 192.168.1.2) and connected to the Internet 30 via the router 20. The router 20 has one global address (i.e., 202.208.122.3) assigned by an ISP. The terminal 14 is also assigned a unique private address (i.e., 192.168.2.1) and connected to the Internet 30 via the router 22. The router 22 also has one global address (i.e., 202.208.127.4) assigned by an ISP. On the other hand, the terminal 16 is connected to the Internet without passing through a router, and is directly assigned a global address (i.e., 202.208.121.2) by an ISP.
The routers 20 and 22 have a NAT (Network Address Translation) function for automatically translating the destination address and the source address of an IP header in order to perform address translations between the Internet global address and the terminal private address. The router 22 has an IP masquerade function in order to assign multiple private addresses for one global address. The IP masquerade function includes a function of automatically translating the destination port number and the source port number of a TCP/UDP header, in addition to the NAT function of automatically translating addresses of an IP header. The IP masquerade function assigns an individual port number to each terminal connected to the LAN and performs communications by associating a combination of the global address and the port number with the private address of each terminal.
For the aforementioned address registration and resolution, the gate keeper 70 includes an address table 72 with which the IP address and the port number of each user terminal are registered.

Now, an explanation is given to the communication procedure for performing address resolutions according to the H.323 protocol in such a communication system. The communication procedure for address resolution is primarily divided into address registration and address notification.
The communication procedure for address registration is performed as follows. First, when a communication application is initiated at each of the user terminals 10, 12, 14, and 16, each terminal sends a unique user identifier, such as its own telephone number, E-mail address, and the number of membership to the gate keeper 70, and requests that the IP address and the port number assigned to the terminal be registered therewith. Upon reception of the address registration request from each terminal, the gate keeper 70 receives the user identifier transmitted and acquires a source IP address from the IP header and a port number from the TCP/UDP header, and registers them along with the user identifier of each terminal with the address table 72. Thus the IP address and the port number of each terminal are registered in the address table 72 as shown in Fig. 9. In this table, the user terminals 10, 12, 14 and 16 have the user identifiers X, Y, Z, and W, respectively.
For example, as the terminal 10 and the terminal 12 are connected to the same LAN which is connected to the Internet via the router 20 having the IP masquerade function, the global address 202.208.122.3 assigned to the router 20 is registered with the address table 72 as the IP address of both the terminals, and the port number 1720 used in H.323 is registered in the address table 72 for the terminal 10, while a port number 52000 dynamically assigned by the router 20 is registered in the address table 72 for the terminal 12.

On the other hand, the communication procedure for address notification is performed as follows. A terminal of a caller (caller terminal) sends a user identifier of a called terminal (callee terminal) to the gate keeper 70, requesting an address notification. Upon reception of the address notification request from the caller terminal, the gate keeper 70 receives the transmitted user identifier to consult the address table 72, thus acquiring and notifying the caller terminal of an IP address and a port number associated with the user identifier of the callee terminal. The caller terminal receives the IP address and the port number notified from the gate keeper 70, and then sets up a call to the callee terminal using the received IP address and port number for communications.
For example, suppose that the terminal 10 is a caller terminal and the terminal 14 is a callee terminal. In this case, the caller terminal 10 sends the user identifier of the callee terminal 14 or "Z" to the gate keeper 70. The gate keeper 70 consults the address table 72 to acquire and then notify the caller terminal 10 of the IP address 202.208.127.4 and the port number 1720 that are associated with the user identifier "Z". This allows the caller terminal 10 to send a communication packet to the callee terminal 14 using the notified IP address (or the global address) and port number. Here, when the communication packet transmitted from the caller terminal 10 passes through the router 20, the source IP address is translated from the private address to the global address by the IP masquerade function. This allows the callee terminal 14 to know the IP address (the global address) and the port number of the caller terminal 10 by acquiring the source IP address and port number of the communication packet received from the caller terminal 10. It is thus possible to send a communication packet from the callee terminal 14 to the caller terminal 10.

[Patent Document 1] Japanese Patent Laid-Open Publication No. 2001-156852

### [DISCLOSURE OF THE INVENTION]

### [PROBLEMS TO BE SOLVED BY THE INVENTION]

However, a communication system that uses the conventional gate keeper 70 had the following problems when a call was made to a terminal connected to the same LAN.
For example, suppose the terminal 10 is a caller terminal and the terminal 12 is a callee terminal. In this case, upon reception of an address notification request of the callee terminal 12 from the caller terminal 10, the gate keeper 70 consults the address table 72 to acquire and then notify the caller terminal 10 of the IP address 202.208.122.3 and the port number 52000 that are associated with the user identifier "Y" of the callee terminal 12. Accordingly, upon transmission of a communication packet transmitted by the caller terminal 10 using the notified IP address and port number, the router 20 transfers the communication packet to the Internet because the destination IP address is a global address. Here, since the destination IP address of the communication packet transferred to the Internet indicates the router 20 itself, the router 20 acquires the communication packet again and translates the destination IP address of the packet into the private address by the IP masquerade function, then transfers the packet to the LAN. This causes the communication packet transmitted from the caller terminal 10 to make a round trip through the router 20 to the callee terminal 12 connected to the same LAN. When transferring the communication packet transmitted from the caller terminal 10 to the Internet, the router 20 translates the source IP address from the private address to the global address by the IP masquerade function. Thus, when the callee terminal 12 transmits the communication packet to the caller terminal 10 using the source IP address and port number of the received communication packet, the communication packet also makes a round trip through the router 20 to the caller terminal 10 in the same manner.

Even though the caller terminal 10 and the callee terminal 12 are connected to the same LAN, communications provided in this manner by an address resolution being performed by the gate keeper 70 cause the communication packet transmitted from either the caller terminal 10 or the callee terminal 12 to make a round trip through the router 20 to the opposing party. This manner of communications had a problem in that the communication system was burdened and the overall performance thereof was degraded.
Furthermore, in the aforementioned example, the caller terminal and the callee terminal are connected to the LAN which is connected to the Internet via the router having the IP masquerade function. In case a router having no IP masquerade function is used, while simultaneous communications of a plurality of terminals on the LAN with external terminals are restricted, communications between terminals connected to the same LAN can be performed successfully by directly designating the private address of the opposing party. However, such direct communications were restricted when using the conventional gate keeper.
Accordingly, when each office of, for example, a business has a LAN to which a plurality of terminals are connected at the same time, and the LAN in each office is connected to another via a WAN or the Internet, for example, the external address and the internal address have to be used properly depending on whether the opposing party is a terminal in another office or in the same office. A severe restriction is thus imposed on seamless communications between a terminal in the same office and a terminal in another office.

Such a problem may also exist in a system like a VPN (Virtual Private Network), e.g., using a communication scheme in which remote terminals are grouped together to communicate with each other by tunneling a communication packet through the Internet or a wide area IP network so as to provide communications between the terminals as if the terminals are connected to the same LAN.
That is, upon reception of an address notification request when a caller terminal attempts to set up a call to a callee terminal that is grouped together by the VPN, the conventional address resolution device provides notification of the global address of the callee terminal. Accordingly, when the caller terminal places a call to the callee terminal using the global address, the fact that the caller terminal and the callee terminal are grouped together by the VPN may not be recognized, resulting in unsuccessful communications beyond the VPN. This causes a possibility that the communications are not properly concealed or a significant burden may be imposed on a network other than the VPN.

A similar problem may also occur in communications using E-mail, e.g., where an external mail address for use in communications with an external organization and an internal mail address for communications within the same organization are used as appropriate.
That is, a user has to know the internal mail address in addition to the external mail address of the recipient. An E-mail that is addressed to a recipient within the same organization using the external mail address would possibly be transferred beyond the internal server, causing the communication system to be burdened and the communications not to be properly concealed.

A similar problem exists not only in the IP telephony and the IP video telephony, but also in typical analog telephony or ISDN telephony.
That is, for a typical business having a plurality of telephones connected to the public telephone line via PBX (Private Branch Exchange), it is necessary to use an external telephone number to make a call to an outside telephone and an internal telephone number to make a call to an inside telephone. As such, one telephone terminal connected to the public telephone line via a PBX is assigned two telephone numbers, which should be properly used. A call placed to an inside telephone using the external telephone number would be connected thereto via the public telephone line, causing the communication system to be burdened and the communications not to be properly concealed.

It is therefore an object of the present invention to provide an address resolution device which provides seamless communications without being conscious of which addresses should be used for communications when an opposing party is assigned both an external address and an internal address, and can dynamically cope with a change of connection status.
In Patent Document 1 mentioned above, a technique for interconnecting between a LAN and the Internet for communications is described. However, the aforementioned problems with communications with a local terminal or a grouped terminal have not yet been solved.

### [MEANS TO SOLVE THE PROBLEMS]

The present invention according to claim 1 provides an address resolution device that includes address registration means for registering an address assigned to a user with an address table upon reception of an address registration request from the user, and address notification means for providing notification of a callee address registered with the address table upon reception of an address notification request from a caller. The address registration means includes a function for registering an internal address of the user with the address table in conjunction with an external address of the user in response to the address registration request from the user. The address notification means includes a function for providing notification of the external address of the callee registered with the address table when the external address of the callee registered with the address table is different from the external address of the caller, and a function for providing notification of the internal address of the callee registered with the address table when the external address of the callee registered with the address table is the same as the external address of the caller, in response to the address notification request from the caller.
According to this invention, the address resolution device includes the address registration means for registering an internal address in conjunction with an external address assigned to a user, and the address notification means for providing notification of the internal address of the callee when the external address of the callee is the same as the external address of the caller in response to the callee address inquiry from the caller, so that communications can be performed without burdening the communication system when the opposing party is a local terminal and seamless communications to the users is provided without being conscious of whether the opposing party is a local terminal or not.

The present invention according to claim 2 provides the address resolution device in which the address registration means includes a function for receiving a user identifier of a source, a function for acquiring a source address, a function for registering the acquired source address with the address table as an external address corresponding to the received user identifier of the source, a function for receiving a source terminal address, and a function for registering the received source terminal address with the address table as an internal address corresponding to the received user identifier of the source. The address notification means includes a function for receiving a user identifier of a callee terminal, a function for acquiring the external address of the callee terminal corresponding to the received user identifier of the callee terminal by consulting the address table, a function for acquiring a source address, a function for providing notification of the acquired external address of the callee terminal when the acquired external address of the callee terminal is different from the acquired source address, and a function for acquiring and providing notification of the internal address of the callee terminal corresponding to the received user identifier of the callee terminal by consulting the address table when the acquired external address of the callee terminal is the same as the acquired source address.
According to this invention, the address registration means includes the functions for receiving a user identifier of a source and registering the acquired source address with the address table as an external address corresponding to the user identifier as well as receiving a source terminal address and registering the received source terminal address with the address table as an internal address, and the address notification means includes the functions for receiving the user identifier of the callee terminal and acquiring the external address of the callee terminal by consulting the address table as well as acquiring the source address, and acquiring and providing notification of the internal address of the callee terminal by consulting the address table when the external address of the callee terminal is the same as the source address, so that direct communications therebetween can be performed without burdening the router and the communication network when the callee terminal and the caller terminal are on the same LAN, and seamless communications to the users can be provided without being conscious of whether the opposing party is called over the Internet or on the same LAN.
The address registration means may register the acquired source address with the address table along with the received user identifier upon reception of the address registration request. Alternatively, the user identifier of each user may be pre-registered with and thus defined in the address table, so that the address registration means will check the received user identifier against the user identifier defined in the address table to register the acquired source address in place upon reception of the address registration request.

The present invention according to claim 3 provides the address resolution device in which the address registration means includes a function for receiving a user identifier of a source, a function for acquiring a source address, a function for registering the acquired source address with the address table as an external address corresponding to the received user identifier of the source, a function for receiving a source terminal address, and a function for registering the received source terminal address with the address table as an internal address corresponding to the received user identifier of the source. The address notification means includes a function for receiving a user identifier of a callee terminal, a function for acquiring the external address of the callee terminal corresponding to the received user identifier of the callee terminal by consulting the address table, a function for receiving the user identifier of the caller terminal, a function for acquiring the external address of the caller terminal corresponding to the received user identifier of the caller terminal by consulting the address table, a function for providing notification of the acquired external address of the callee terminal when the acquired external address of the callee terminal is different from the acquired external address of the caller terminal, and a function for acquiring and providing notification of the internal address of the callee terminal corresponding to the received user identifier of the callee terminal by consulting the address table when the acquired external address of the callee terminal is the same as the acquired external address of the caller terminal.
According to this invention, the address registration means includes the functions for receiving a user identifier of a source and registering the acquired source address with the address table as an external address corresponding to the user identifier as well as receiving the source terminal address and registering the received source terminal address with the address table as an internal address, and the address notification means includes the functions for receiving the user identifier of the callee terminal and acquiring the external address of the callee terminal by consulting the address table as well as receiving the user identifier of the caller terminal, acquiring the external address of the caller terminal by consulting the address table, and acquiring and providing notification of the internal address of the callee terminal by consulting the address table when the external address of the callee terminal is the same as the external address of the caller terminal, so that direct communications therebetween can be performed without burdening the router and the communication network when the callee terminal and the caller terminal are on the same LAN, and seamless communications to the users can be provided without being conscious of whether the opposing party is called over the Internet or on the same LAN.

The present invention according to claim 4 provides the address resolution device in which in the address registration means, the function for acquiring a source address includes a function for acquiring a source port number, and the function for registering the source address with the address table as an external address includes a function for registering the acquired source port number. In the address notification means, the function for acquiring the external address of the callee terminal includes a function for acquiring the corresponding port number by consulting the address table, and the function for providing notification of the external address of the callee terminal includes a function for providing notification of the acquired corresponding port number.
According to this invention, the address registration means includes the function for acquiring and registering the source port number when acquiring the source address and registering the same with the address table, and the address notification means includes the function for acquiring and providing notification of the corresponding port number when acquiring and providing notification of the external address of the callee terminal, so that address resolutions on a terminal connected to the Internet via a router having the IP masquerade function can be performed.
Alternatively, the address registration means may also be configured such that the function for receiving a source terminal address includes a function for receiving a source port number, and the function for registering the source terminal address with the address table as an internal address includes a function for registering the received source port number, and the address notification means may also be configured such that the function for acquiring and providing notification of the internal address of the callee terminal includes a function for acquiring and providing notification of the corresponding port number by consulting the address table. This allows for designating the port number even when providing notification of the internal address, thereby enabling it to be utilized for high-level application-specific use.

The present invention according to claim 5 provides the address resolution device in which the address registration means includes a function for registering the received source terminal address with the address table as an internal address when the received source terminal address is different from the acquired source address.
According to this invention, the address registration means determines that the terminal includes an internal address when the received source terminal address is different from the acquired source address, and then registers the received source terminal address with the address table as an internal address, so that unnecessary registration of internal addresses is eliminated.

The present invention according to claim 6 provides the address resolution device in which the address registration means includes a function for registering a grouping ID with the address table when the user is grouped together with another user in response to the address registration request from the user. The address notification means includes a function for providing notification of the internal address of the callee registered with the address table when the callee and the caller have the same grouping ID registered with the address table in response to the address notification request from the caller.
According to this invention, even when those terminals grouped together, e.g., by a VPN, communicate with each other, the address notification process provides notification of the internal address of the callee instead of the external address of the callee when both the callee and the caller have the same grouping ID registered with the address table, so that communications can be performed via the VPN, thereby preventing communications via a route other than the VPN. Accordingly, this allows the communications to be properly concealed and a communication network other than the VPN to be less burdened. It is also possible to provide seamless communications to the users without being conscious of whether the opposing party is a grouped terminal or not.

The present invention according to claim 7 provides the address resolution device in which the address notification means includes a function for providing notification of a registered entry in the address table in response to a request from a terminal.
According to this invention, the address notification means includes the function for providing notification of a registered entry in the address table in response to a request from a terminal, so that the user can select the terminal of an opposing party displayed in a list of terminals registered with the address table.
Thus, the address resolution device according to this invention may be used as a gate keeper for automatically performing address resolutions in accordance with a communication protocol, and may also be used as a directory server for allowing the user terminal to acquire information regarding to terminals registered with the address table and the user to select the opposing party.

The present invention according to claim 8 provides an address resolution method which includes an address registration step of registering an address assigned to a user with an address table upon reception of an address registration request from the user, and an address notification step of providing notification of a callee address registered with the address table upon reception of an address notification request from a caller. In the method, the address registration step includes a step of registering an internal address of the user with the address table in conjunction with an external address of the user in response to the address registration request from the user. The address notification step includes a step of providing notification of the external address of the callee registered with the address table when the external address of the callee registered with the address table is different from the external address of the caller, and a step of providing notification of the internal address of the callee registered with the address table when the external address of the callee registered with the address table is the same as the external address of the caller, in response to the address notification request from the source.
According to this invention, the address resolution method includes the address registration step of registering an internal address in conjunction with an external address assigned to a user, and the address notification step of providing notification of the internal address of the callee when the external address of the callee is the same as the external address of the caller, in response to the callee address inquiry from the caller, so that communications can be performed without burdening the communication system when the opposing party is a local terminal, and seamless communications to the users can be provided without being conscious of whether the opposing party is a local terminal or not.

The present invention according to claim 9 provides the address resolution method in which the address registration step includes a step of receiving a user identifier of a source, a step of acquiring a source address, a step of registering the acquired source address with the address table as an external address corresponding to the received user identifier of the source, a step of receiving a source terminal address, and a step of registering the received source terminal address with the address table as an internal address corresponding to the received user identifier of the source. The address notification step includes a step of receiving a user identifier of a callee terminal, a step of acquiring the external address of the callee terminal corresponding to the received user identifier of the callee terminal by consulting the address table, a step of acquiring a source address, a step of providing notification of the acquired external address of the callee terminal when the acquired external address of the callee terminal is different from the acquired source address, and a step of acquiring and providing notification of the internal address of the callee terminal corresponding to the received user identifier of the callee terminal by consulting the address table when the acquired external address of the callee terminal is the same as the acquired source address.
According to this invention, the address registration step includes the steps of receiving a user identifier of a source and registering the acquired source address with the address table as an external address corresponding to the user identifier as well as receiving a source terminal address and registering the received source terminal address with the address table as an internal address, and the address notification step includes the steps of receiving the user identifier of a callee terminal and acquiring the external address of the callee terminal by consulting the address table as well as acquiring the source address, and acquiring and providing notification of the internal address of the callee terminal by consulting the address table when the external address of the callee terminal is the same as the source address, so that direct communications therebetween can be performed without burdening the router and the communication network when the callee terminal and the caller terminal are on the same LAN, and seamless communications to the users can be provided without being conscious of whether the opposing party is called over the Internet or on the same LAN.
The address registration step may register the acquired source address with the address table along with the received user identifier upon reception of the address registration request. Alternatively, the user identifier of each user may be pre-registered with and thus defined in the address table, so that the address registration step will check the received user identifier against the user identifier defined in the address table to register the acquired source address in place upon reception of the address registration request.
Furthermore, the address registration step may register the received source terminal address with the address table as an internal address when the received source terminal address is different from the acquired source address. Accordingly, the address registration step determines that the terminal includes an internal address when the received source terminal address is different from the acquired source address, and then registers the received source terminal address with the address table as an internal address, so that unnecessary registration of internal addresses is eliminated.

The present invention according to claim 10 provides the address resolution method in which the address registration step includes a step of receiving a user identifier of a source, a step of acquiring a source address, a step of registering the acquired source address with the address table as an external address corresponding to the received user identifier of the source, a step of receiving a source terminal address, and a step of registering the received source terminal address with the address table as an internal address corresponding to the received user identifier of the source. The address notification step includes a step of receiving a user identifier of a callee terminal, a step of acquiring the external address of the callee terminal corresponding to the received user identifier of the callee terminal by consulting the address table, a step of receiving the user identifier of the caller terminal, a step of acquiring the external address of the caller terminal corresponding to the received user identifier of the caller terminal by consulting the address table, a step of providing notification of the acquired external address of the callee terminal when the acquired external address of the callee terminal is different from the acquired external address of the caller terminal, and a step of acquiring and providing notification the internal address of the callee terminal corresponding to the received user identifier of the callee terminal by consulting the address table when the acquired external address of the callee terminal is the same as the acquired external address of the caller terminal.
According to this invention, the address registration step includes the steps of receiving a user identifier of a source and registering the acquired source address with the address table as an external address corresponding to the user identifier as well as receiving a source terminal address and registering the received source terminal address with the address table as an internal address, and the address notification step includes the steps of receiving the user identifier of the callee terminal and acquiring an external address of the callee terminal by consulting the address table as well as receiving the user identifier of the caller terminal, acquiring an external address of the caller terminal by consulting the address table, and acquiring and providing notification of an internal address of the callee terminal by consulting the address table when the external address of the callee terminal is the same as the external address of the caller terminal, so that direct communications therebetween can be performed without burdening the router and the communication network when the callee terminal and the caller terminal are on the same LAN, and seamless communications to the users can be provided without being conscious of whether the opposing party is called over the Internet or on the same LAN.

The present invention according to claim 11 provides the address resolution method in which, in the address registration step, the step of acquiring a source address includes a step of acquiring a source port number, and the step of registering the source address with the address table as an external address includes a step of registering the acquired source port number. In the address notification step, the step of acquiring the external address of the callee terminal includes a step of acquiring the corresponding port number by consulting the address table, and the step of providing notification of the external address of the callee terminal includes a step of providing notification of the acquired corresponding port number.
According to this invention, the address registration step includes the step of acquiring and registering the source port number when acquiring and registering the source address with the address table, and the address notification step includes the step of acquiring and providing notification of the corresponding port number when acquiring and providing notification of the external address of the callee terminal, so that address resolutions on a terminal connected to the Internet via a router having the IP masquerade function can be performed.
Alternatively, the address registration step may also be configured such that the step of receiving a source terminal address includes a step of receiving a source port number, and the step of registering the source terminal address with the address table as an internal address includes a step of registering the received source port number, and the address notification step may also be configured such that the step of acquiring and providing notification of the internal address of the callee terminal includes a step of acquiring and providing notification of the corresponding port number by consulting the address table. This allows for designating the port number even when providing notification of the internal address, thereby enabling it to be utilized for high-level application-specific use.

The present invention according to claim 12 provides the address resolution method in which the address registration step includes a step of registering a grouping ID with the address table when the user is grouped together with another user in response to the address registration request from the user. The address notification step includes a step of providing notification of the internal address of the callee registered with the address table when the callee and the caller have the same grouping ID registered with the address table in response to the address notification request from the caller.
According to this invention, even when terminals grouped together, e.g., by a VPN, communicate with each other, the address notification process provides notification of the internal address of the callee terminal instead of the external address of the callee terminal when both the callee terminal and the caller terminal have the same grouping ID registered with the address table, so that communications can be performed via the VPN, thereby preventing communications via a route other than the VPN. Accordingly, this allows the communications to be properly concealed and communication network other than the VPN to be less burdened. Also seamless communications to the users can be provided without being conscious of whether the opposing party is a grouped terminal or not.

The present invention according to claim 13 provides a communication system which includes an address resolution device on a communication network for communicating between terminals connected to the communication network. The terminal includes means for sending the user identifier of the source and the terminal address of the source to the address resolution device to request for an address registration. The address resolution device includes an address table for registering addresses of terminals connected to the network. The address resolution device includes means for receiving the user identifier of the source transmitted from the terminal upon reception of an address registration request from the terminal, means for acquiring the source address, means for registering the acquired source address with the address table as an external address corresponding to the received user identifier of the source, means for receiving the source terminal address transmitted from the terminal, and means for registering the received source terminal address with the address table as an internal address corresponding to the received user identifier. The terminal includes means for sending a user identifier of a callee terminal to the address resolution device to request for an address notification. The address resolution device includes means for receiving the user identifier of the callee terminal transmitted from the terminal upon reception of the address notification request from the terminal, means for acquiring the external address of the callee terminal corresponding to the received user identifier of the callee terminal by consulting the address table, means for acquiring the source address, means for providing notification of the acquired external address of the callee terminal when the acquired terminal address of the callee terminal is different from the acquired source address, and means for acquiring and providing notification of the internal address of the callee terminal corresponding to the received user identifier of the callee terminal by consulting the address table when the acquired external address of the callee terminal is the same as the acquired source address.
According to this invention, the terminal includes the means for sending the user identifier of the source and the terminal address of the source to the address resolution device to request for an address registration, the address resolution device includes the means for receiving the user identifier of the source, and receiving the source terminal address from the terminal to register the received address with the address table as an internal address upon registering the acquired source address with the address table as an external address corresponding to the user identifier of the source, the terminal includes the means for sending a user identifier of a callee terminal to the address resolution device to request for an address notification, and the address resolution device includes the means for receiving the user identifier of the callee terminal to acquire the external address of the callee terminal by consulting the address table as well as acquiring the source address, and acquiring the internal address of the callee terminal registered with the address table to notify the source of the acquired address when the external address of the callee terminal is the same as the source address, so that direct communications therebetween can be performed without burdening the router and the communication network when the callee terminal and the caller terminal are on the same LAN, and seamless communications to the users can be provided without being conscious of whether the opposing party is called over the Internet or on the same LAN.
The address registration device may also register the received source terminal address with the address table as an internal address when the received source terminal address is different from the acquired source address. Accordingly, it is determined that the terminal has an internal address when the received source terminal address is different from the acquired source address, and then the received source terminal address is registered with the address table as an internal address, so that unnecessary registration of internal addresses is eliminated.

The present invention according to claim 14 provides a communication system which includes an address resolution device on a communication network for communicating between terminals connected to the communication network. The terminal includes means for sending the user identifier of the source and the terminal address of the source to the address resolution device to request for an address registration. The address resolution device includes an address table for registering addresses of terminals connected to the network. The address resolution device includes means for receiving the user identifier of the source transmitted from the terminal upon reception of an address registration request from the terminal, means for acquiring the source address, means for registering the acquired source address with the address table as an external address corresponding to the received user identifier of the source, means for receiving a source terminal address transmitted from the terminal, and means for registering the received source terminal address with the address table as an internal address corresponding to the received user identifier. The terminal includes means for sending a user identifier of a callee terminal and the user identifier of the caller terminal to the address resolution device to request for an address notification. The address resolution device includes means for receiving the user identifier of the callee terminal transmitted from the terminal upon reception of the address notification request from the terminal, means for acquiring the external address of the callee terminal corresponding to the received user identifier of the callee terminal by consulting the address table, means for receiving the user identifier of the caller terminal transmitted from the terminal, means for acquiring an external address of the caller terminal corresponding to the received user identifier of the caller terminal by consulting the address table, means for providing notification of the acquired external address of the callee terminal when the acquired external address of the callee terminal is different from the acquired external address of the caller terminal, and means for acquiring and providing notification of the internal address of the callee terminal corresponding to the received user identifier of the callee terminal by consulting the address table when the acquired external address of the callee terminal is the same as the acquired external address of the caller terminal.
According to this invention, the terminal includes the means for sending the user identifier of the source and the terminal address of the source to the address resolution device to request for an address registration, the address resolution device includes the means for receiving the user identifier of the source, and receiving the source terminal address from the terminal to register the received address with the address table as an internal address upon registering the acquired source address with the address table as an external address corresponding to the user identifier of the source, the terminal includes the means for sending a user identifier of a callee as well as the user identifier of the caller to the address resolution device to request for an address notification, and the address resolution device includes the means for receiving the user identifier of the callee and the user identifier of the caller to acquire the external address of the callee and the external address of the caller by consulting the address table, and acquiring the internal address registered with the address table to notify the source of the acquired address when the external address of the callee and the external address of the caller are the same, so that direct communications therebetween can be performed without burdening the router and the communication network when the callee terminal and the caller terminal are connected to the same LAN, and seamless communications to the users can be provided without being conscious of whether the opposing party is called over the Internet or connected to the same LAN.

The present invention according to claim 15 provides the communication system in which in the address resolution device, the means for acquiring a source address includes means for acquiring a source port number, and the means for registering the source address with the address table as an external address includes means for registering the acquired source port number. The means for acquiring the external address of the callee terminal includes means for acquiring the corresponding port number by consulting the address table. The means for providing notification of the external address of the callee terminal includes means for providing notification of the acquired corresponding port number.
According to this invention, the address resolution device includes the means for acquiring and registering the source port number when acquiring the source address and registering the same with the address table, and means for acquiring and providing notification of the corresponding port number when acquiring and providing notification of the external address of the callee terminal, so that address resolutions on a terminal connected to the Internet via a router having the IP masquerade function can be performed.
Alternatively, the address resolution device may also be configured such that the means for receiving a source terminal address includes means for receiving a source port number, the means for registering the source terminal address with the address table as an internal address includes means for registering the received source port number, and the means for acquiring and providing notification of the internal address of the callee terminal includes means for acquiring and providing notification of the corresponding port number by consulting the address table. This allows for designating the port number even in providing notification of the internal address, thereby enabling it to be utilized for high-level application-specific use.

The present invention according to claim 16 provides the communication system in which the address resolution device includes means for registering a grouping ID with the address table when the terminal is grouped together with another terminal in response to the address registration request from the terminal. The device also includes means for providing notification of the internal address of the callee terminal registered with the address table when both the callee terminal and the caller terminal have the same grouping ID registered with the address table in response to the address notification request from the terminal.
According to this invention, even when terminals grouped together, e.g., by a VPN, communicate with each other, the address notification process provides notification of the internal address of the callee terminal when both the callee terminal and the caller terminal have the same grouping ID registered with the address table, so that communications can be performed via the VPN, thereby preventing communications via a route other than the VPN. Accordingly, this allows the communications to be properly concealed and the communication system to be less burdened. It is also possible to provide seamless communications to users without being conscious of whether the opposing party is a grouped terminal.

The present invention according to claim 17 provides an address resolution device that includes address registration means for registering a mail address assigned to a user with an address table upon reception of an address registration request from the user, and address notification means for providing notification of a recipient mail address registered with the address table upon reception of an address notification request from a sender. The address registration means includes a function for registering an internal mail address of the user with the address table in conjunction with an E-mail address of the user in response to the address registration request from the user. The address notification means includes a function for providing notification of the E-mail address of the recipient registered with the address table when the domain address of the E-mail address of the recipient registered with the address table is different from the domain address of the E-mail address of the sender, and a function for providing notification of the internal mail address of the recipient registered with the address table when the domain address of the E-mail address of the recipient registered with the address table is the same as the domain address of the E-mail address of the sender, in response to the address notification request from the sender.
According to this invention, the address resolution device includes the address registration means for registering an internal mail address as well as an E-mail address assigned to a user, and the address notification means for providing notification of the internal mail address of the recipient when the domain address of the E-mail address of the recipient is the same as the domain address of the E-mail address of the sender in response to the recipient address inquiry from the sender, so that mails can be delivered without burdening the communication system when the recipient terminal is in the same domain and seamless communications to the users can be provided without being conscious of whether the recipient terminal is in the same domain or not.

The present invention according to claim 18 provides an address resolution device that includes address registration means for registering a telephone number assigned to a user with an address table upon reception of an address registration request from the user, and address notification means for providing notification of a callee telephone number registered with the address table upon reception of an address notification request from a caller. The address registration means includes a function for registering an internal telephone number of the user with the address table in conjunction with an external telephone number of the user in response to the address registration request from the user. The address notification means includes a function for providing notification of the external telephone number of the callee and the internal telephone number of the callee registered with the address table when the external telephone number of the callee registered with the address table is different from the external telephone number of the caller, and a function for providing notification of the internal telephone number of the callee registered with the address table when the external telephone number of the callee registered with the address table is the same as the external telephone number of the caller, in response to the address notification request from the caller.
According to this invention, the address resolution device includes the address registration means for registering an internal telephone number as well as an external telephone number assigned to a user, and the address notification means for providing notification of the internal telephone number of the callee when the external telephone number of the callee is the same as the external telephone number of the caller in response to the callee address inquiry from the caller, so that communications can be performed without burdening the communication system when the called telephone terminal can be connected using internal telephone number, and seamless communications to the users can be provided without being conscious of whether the called telephone can be connected using internal telephone number or not.

### [ADVANTAGE OF THE INVENTION]

As described above, the present invention makes it possible to provide seamless communications when an opposing party is assigned both an external address and an internal address, without being conscious of which addresses should be used for communications and to dynamically accommodate variations in connection status.

### [BRIEF DESCRIPTION OF THE DRAWINGS]

[Fig. 1] a view illustrating the configuration of a communication system using an address resolution device according to a first embodiment of the present invention;
[Fig. 2] a view illustrating a communication procedure of the address resolution device according to the first embodiment of the present invention;
[Fig. 3] a flowchart showing the address registration process performed by the address resolution device according to the first embodiment of the present invention;
[Fig. 4] a flowchart showing the address notification process performed by the address resolution device according to the first embodiment of the present invention;
[Fig. 5] a view illustrating the configuration of a communication system using an address resolution device according to a second embodiment of the present invention;
[Fig. 6] a view illustrating the configuration of a communication system using an address resolution device according to a third embodiment of the present invention;
[Fig. 7] a flowchart showing the address registration process performed by the address resolution device according to the third embodiment of the present invention;
[Fig. 8] a flowchart showing the address notification process performed by the address resolution device according to the third embodiment of the present invention;
[Fig. 9] a view illustrating the configuration of a communication system employing a conventional address resolution device;
[Fig. 10] a view illustrating the configuration of a communication system employing an address resolution device according to a fourth embodiment of the present invention;
[Fig. 11] a flowchart showing the address registration process performed by the address resolution device according to the fourth embodiment of the present invention;
[Fig. 12] a flowchart showing the address notification process performed by the address resolution device according to the fourth embodiment of the present invention;
[Fig. 13] a view illustrating the configuration of a communication system employing an address resolution device according to a fifth embodiment of the present invention;
[Fig. 14] a flowchart showing the address registration process performed by the address resolution device according to the fifth embodiment of the present invention; and
[Fig. 15] a flowchart showing the address notification process performed by the address resolution device according to the fifth embodiment of the present invention;

### [Explanation of symbols]

10, 12, 14, 16: User terminal
20, 22: Router
30: Internet
40: Gate keeper or address resolution device according to the first embodiment of the present invention
42: Address table of address resolution device according to the first embodiment of the present invention
50: Gate keeper or address resolution device according to the second embodiment of the present invention
52: Address table of the address resolution device according to the second embodiment of the present invention
60: Gate keeper or address resolution device according to the third embodiment of the invention
62: Address table of the address resolution device according to the third embodiment of the present invention
70: Conventional gate keeper or address resolution device
72: Address table of the conventional address resolution device
110, 112, 114, 116, 118, 119: E-mail user
120, 122, 124: Domain server
130: Internet
140: Mail address server or address resolution device according to the fourth embodiment of the present invention 142: Mail address table of address resolution device according to the fourth embodiment of the present invention 210,212,214,216,218,219: Telephone terminal
220,222,224: PBX
230: Public telephone line
232: Private telephone line
240: Telephone number server or address resolution device according to the fifth embodiment of the present invention 242: Telephone number table of address resolution device according to the fifth embodiment of the present invention

### [BEST MODE FOR CARRYING OUT THE INVENTION]

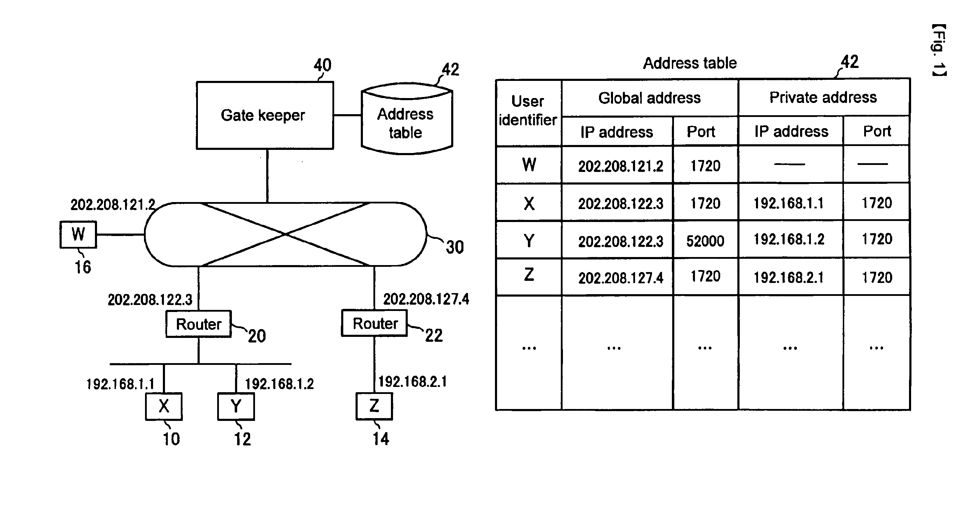

Fig. 1 illustrates the configuration of a communication system including an address resolution device according to a first embodiment of the present invention. In Fig. 1, numerals 10, 12, 14, and 16 indicate terminals which are used by users X, Y, Z, and W, respectively, numerals 20 and 22 indicate routers, numeral 30 indicates the Internet, and numeral 40 indicates a gate keeper according to the first embodiment of the present invention.
In this embodiment, each terminal is connected to the Internet in the same manner as in the conventional communication system shown in Fig. 9, and each user terminal is assigned a global address and a private address as shown in Fig. 1.
The gate keeper 40 includes an address table 42 with which the address of each user terminal is registered, and functions to register and notify addresses in accordance with the following communication procedures.

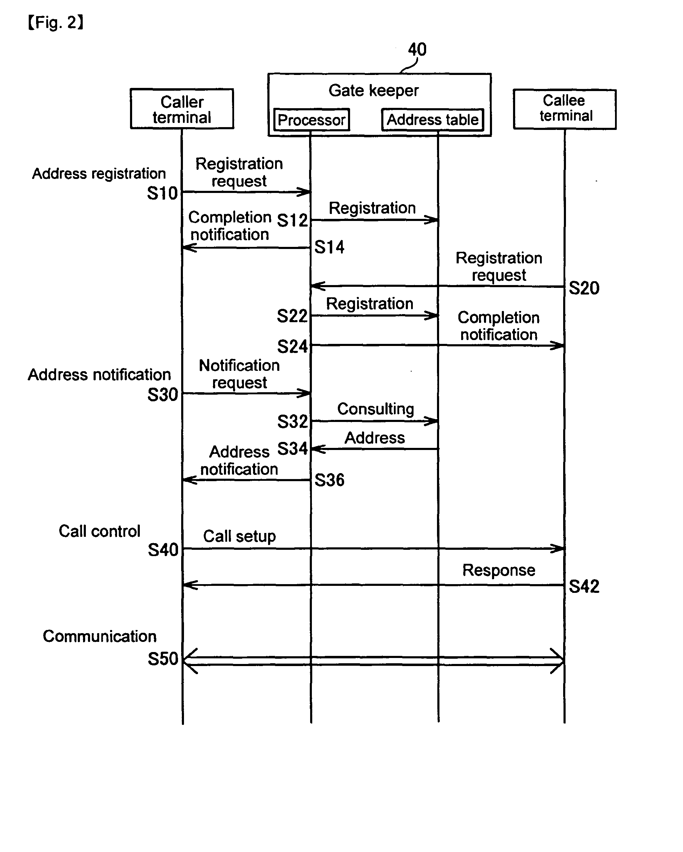

Fig. 2 illustrates the communication procedure of the address resolution device according to the first embodiment of the present invention. As illustrated, the communication procedure is performed in the order of address registration, address notification, call control, and communication.
In the address registration, each user terminal being connected to the Internet sends its own user identifier to the gate keeper 40, requesting address registration (S10 and S20). The gate keeper 40 registers the source address with the address table 42 (S12 and S22), and then notifies the source of the registration having been completed (S14 and S24). In the address notification, the caller terminal sends the user identifier of the callee terminal to the gate keeper 40, requesting address notification (S30). The gate keeper 40 searches the address table 42 for the address corresponding to the user identifier of the callee terminal (S32) to acquire the address of the callee terminal (S34), and then notifies the caller terminal of the acquired address of the callee terminal (S36). In the call control, the caller terminal sets up a call to the callee terminal using the notified address (S40), and the callee terminal sends a response to the call from the caller terminal (S42). This allows the caller terminal and the callee terminal to negotiate with each other about the communication scheme and the communication rate and then establish a connection therebetween, and a call is then initiated based on the results of the negotiation (S50).

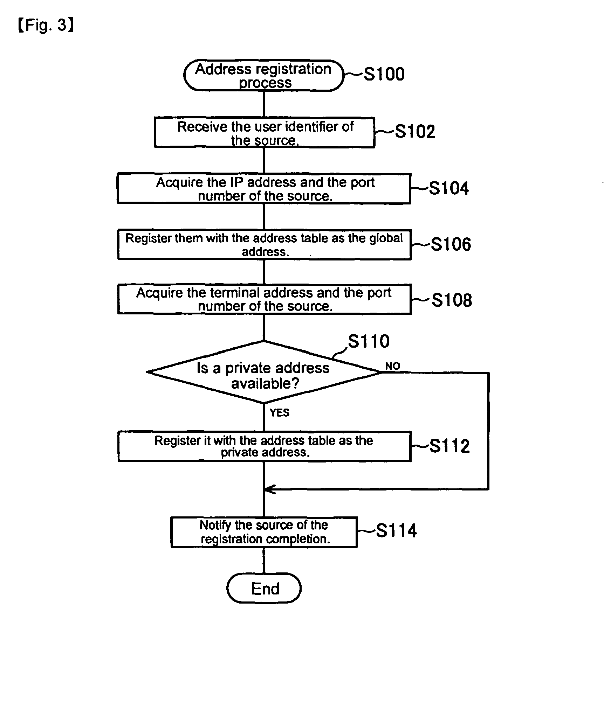

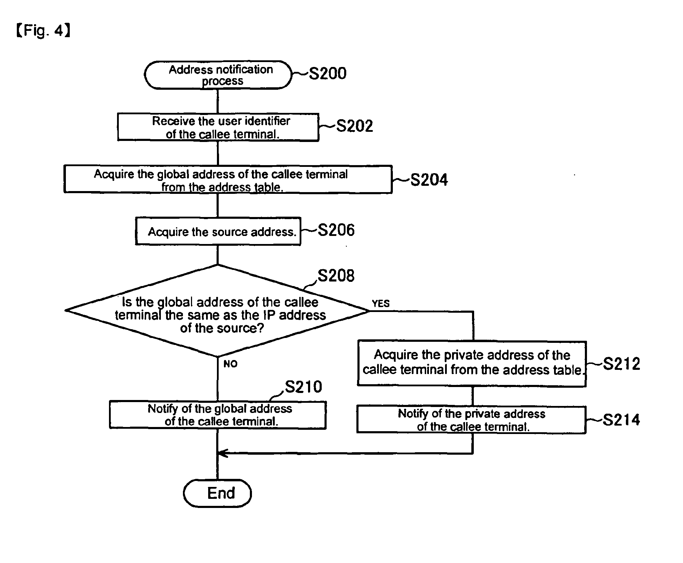

The aforementioned communication procedure is similar to that of the conventional gate keeper. However, the gate keeper 40 functions as follows. That is, in the address registration, the gate keeper 40 registers the private address of the source with the address table 42 in conjunction with the global address, and in the address notification, consults the address table 42 to acquire the global address of the callee terminal. When the acquired terminal address of the callee terminal is different from the global address of the caller terminal, the gate keeper 40 determines that the callee terminal is an external terminal, and then notifies the caller terminal of the global address of the callee terminal. On the other hand, when the global address of the callee terminal is the same as the global address of the caller terminal, the gate keeper 40 determines that the callee terminal is on the same LAN. The gate keeper 40 then consults the address table 42 to acquire the private address of the callee terminal, and notifies the caller terminal of the acquired address.
To provide the aforementioned function, the gate keeper 40 performs the address registration process as shown in Fig. 3 and the address notification process as shown in Fig. 4.

As shown in Fig. 3, in the address registration process (S100), the process receives the user identifier of the source which was transmitted from the requesting terminal (S102), acquires the IP address and the port number of the source from the communication packet (S104), and then registers the acquired IP address and port number of the source with the address table as the global address corresponding to the received user identifier of the source (S106). Then, the process receives the terminal address and the port number of the source transmitted from the requesting terminal (S108). When the source terminal address received is different from the source IP address acquired, the process determines that the source terminal address is a private address (S110). The process then registers the received source terminal address and port number with the address table as the private address corresponding to the received user identifier of the source (S112). When the source terminal address received is the same as the source IP address acquired, the process determines that the source terminal address is a global address (S110), and then skips S112. Then, the process notifies the source of the registration having been completed (S114), and then ends the address registration process.

As shown in Fig. 4, the address notification process (S200) receives the user identifier of the callee terminal transmitted from the caller terminal (S202). The process then consults the address table to acquire the global address (the IP address and the port number) of the callee terminal corresponding to the received user identifier of the callee terminal (S204), and acquires the source IP address from the communication packet (S206). When the acquired IP address of the global address of the callee terminal is different from the acquired source IP address, the process determines that the callee terminal is an external terminal (S208), and then notifies the caller terminal of the acquired global address (the IP address and the port number) of the callee terminal (S210). On the other hand, when the acquired IP address of the global address of the callee terminal is the same as the acquired source IP address, the process determines that the callee terminal is on the same LAN (S208). The process then consults the address table 42 to acquire the private address (the IP address and the port number) of the callee terminal corresponding to the received user identifier of the callee terminal (S212). Then, the process notifies the caller terminal of the acquired private address (the IP address and the port number) of the callee terminal (S214), and ends the address notification process.

The foregoing processes allow the caller terminal to set up a call to the callee terminal using the notified IP address and port number of the callee terminal. Accordingly, when the callee terminal is an external terminal, the caller terminal is notified of the global address of the callee terminal and thus communicates with the external terminal via the router. On the other hand, when the callee terminal is on the same LAN, the caller terminal is notified of the private address of the callee terminal and thus communicates directly with the callee terminal on the LAN without passing through the router. Thus, even when the callee terminal and the caller terminal are on the same LAN, it is possible to perform communications without burdening the router and the communication network. It is also possible to provide seamless communications to the users without being conscious of whether the callee terminal is an external terminal or on the same LAN.

In the address registration process described above, the gate keeper 40 is adapted to receive the source terminal address and port number in order to register the private address of the requesting terminal with the address table. However, it should be noted that the source terminal address and port number are the same as the source address and port number when the requesting terminal sends an address registration request to the gate keeper. Accordingly, upon requesting the address registration, the requesting terminal may copy the source IP address and port number of the communication packet into the payload for transmission. Alternatively, the requesting terminal may acquire the IP address assigned to itself to send the acquired address to the gate keeper in conjunction with the port number used in the communication protocol concerned. Such a process performed by the requesting terminal can be easily incorporated as an additional option into a standard communication protocol.

The aforementioned embodiment is adapted such that the address registration process receives the port number as well as the address of the requesting terminal, which are in turn registered with the address table as a private address, and the address notification process consults the address table to acquire and notify the caller terminal of the port number as well as the IP address when acquiring and providing notification of the private address of the callee terminal. However, the present invention is not limited thereto, but the address registration process may register only the requesting terminal address (IP address) with the address table as a private address, and the address notification process may consult the address table to acquire only the IP address as the private address of the callee terminal, and notify the caller terminal of a standard port number of the communication protocol concerned as the port number to be notified of.

The aforementioned embodiment is also adapted such that the address registration process determines that the requesting terminal has a private address when the received source terminal address is different from the acquired source IP address, and then registers the source terminal address with the address table as a private address. However, the present invention is not limited thereto, but, for example, when the source terminal address received is 192.168.xxx.xxx or 172.xxx.xxx.xxx, which is typically assigned as a private address, the process may determine the source terminal address is a private address, which is then registered with the address table.
The requesting terminal may also be adapted to determine whether the source terminal address is a private address or not, so that the gate keeper unconditionally registers the source terminal address once received from the requesting terminal.
Furthermore, suppose that the requesting terminal has no private address, and the address registration process receives the source global address as the source terminal address, and registers the global address with the address table as a private address. Even in this case, no problem would occur because the global address of the callee terminal is different from the global address of the caller terminal, and the address notification process provides notification of the global address of the callee terminal. Accordingly, the received source terminal address and port number may be unconditionally registered with the address table, which also provides the advantages of the present invention.

The aforementioned embodiment is adapted such that the address registration process registers the received user identifier of the source with the address table in conjunction with the acquired source global address and private address. However, the present invention is not limited thereto, but, for example, a user may be pre-registered as a member to preset the user identifier of the registered member in the address table. When an address registration request is received from a requesting terminal, the process may check the received user identifier against the user identifier registered in the address table, and then correspondingly register the source global address or the source private address in place.

In the aforementioned embodiment, the address registration process acquires the source IP address and port number of the communication packet, which are in turn registered as the global address with the address table. However, the requesting terminal may also acquire the source global address (the IP address and the port number) to send the global address to the gate keeper in conjunction with the user identifier of the source, so that the gate keeper registers the received source global address (the IP address and the port number) with the address table corresponding to the received user identifier.
The aforementioned embodiment is also adapted such that the address notification process acquires the source IP address of the communication packet, which is in turn compared, as the IP address of the global address of the caller terminal, with the IP address of the global address of the callee terminal. However, upon requesting the address notification, the caller terminal may send the user identifier of the caller terminal in conjunction with the user identifier of the callee terminal, so that the gate keeper consults the address table to acquire the IP address of the global address of the caller terminal corresponding to the received user identifier of the caller terminal, and then compares the acquired IP address of the global address of the caller terminal address with the acquired IP address of the global address of the callee terminal.

In the aforementioned embodiment, the address registration process registers the port number as well as the IP address with the address table as the global address of each user terminal, and then the address notification process consults the address table to acquire and notify the caller terminal of the port number as well as the IP address as the global address of the callee terminal. However, the router to be used in the communication system may not include the IP masquerade function for performing port number translations but only the NAT function for performing address translations in one-to-one correspondence between the global address and the private address. In this case, the process needs to neither register the port number with the address table nor notify the caller terminal of the port number.

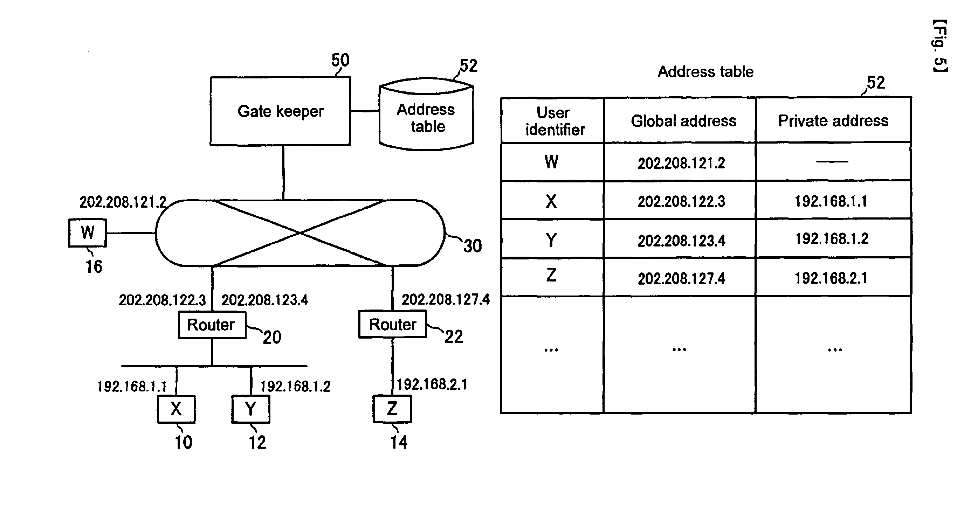

Fig. 5 illustrates the configuration of a communication system employing such an address resolution device according to a second embodiment of the present invention. As illustrated, the user terminals 10, 12, 14 and 16, the routers 20 and 22, and the Internet 30 are provided in a similar manner to the conventional arrangement. However, this embodiment shows a case where the router 20 has no IP masquerade function and is assigned two global addresses (i.e., 202.208.122.3 and 202.208.122.4) by an ISP, which are respectively associated with the private address of the user terminal 10 (i.e., 192.168.1.1) and the private address of the user terminal 12 (i.e., 192.168.1.2) for address translations. Similar to the address table 42 of the gate keeper 40 mentioned above, a gate keeper 50 serving as an address resolution device according to this embodiment also has an address table 52 for registering global addresses and private addresses. However, the address table 52 does not register any port number but only registers IP addresses as global addresses and private addresses.

The address registration process in the gate keeper 50 is performed in the same manner as the address registration process in the gate keeper 40 shown in Fig. 3, except that only the source IP address is acquired in S104, and only the acquired source IP address is registered as the global address with the address table in S106. Additionally, only the source terminal address is received in S108, and only the received source terminal address is registered with the address table as the private address in S112.
On the other hand, the address notification process in the gate keeper 50 is performed in the same manner as the address notification process in the gate keeper 40 shown in Fig. 4, except that the process consults the address table to acquire only the IP address as the global address of the callee terminal in S204, and notifies the caller terminal only of the IP address as the global address of the callee terminal in S210. Additionally, the process consults the address table to acquire only the IP address as the private address of the callee terminal in S212, and notifies the caller terminal of the IP address as the private address of the callee terminal in S214.

This allows a communication system to operate in the following manner, which uses a router having the NAT function for performing address translations on a plurality of global addresses corresponding to the private address of each terminal. That is, the address registration process registers the global address (IP address) and the private address (IP address) of each user terminal with an address table. The address notification process consults the address table to acquire the global address (IP address) of the callee terminal. When the global address (IP address) of the callee terminal is different from the global address of the caller terminal (the source IP address), the process notifies the caller terminal of the global address of the callee terminal. When the global address (IP address) of the callee terminal is the same as the global address of the caller terminal(source IP address), the process consults the address table to acquire and notify the caller terminal of the private address (the IP address) of the callee terminal. Accordingly, even when the callee terminal and the caller terminal are on the same LAN, it is possible to perform direct communications therebetween without burdening the router and the communication network. It is also possible to provide seamless communications to the users without being conscious of whether the callee terminal is an external terminal or on the same LAN.

In the aforementioned embodiment, each address resolution device includes a single gate keeper and an address table therein. However, the present invention is not limited thereto, and the address resolution device may have any configuration as long as the configuration allows for a connection to the Internet and access by each user terminal.

Furthermore, in the aforementioned embodiment, the address notification process notifies the caller terminal of the private address of the callee terminal when both the terminals are physically connected to the same LAN. However, the process may provide notification of the private address of the callee terminal when communications are performed between terminals grouped together via the Internet or a wide area IP network, for example, as in a VPN. This also provides the advantages of the present invention.

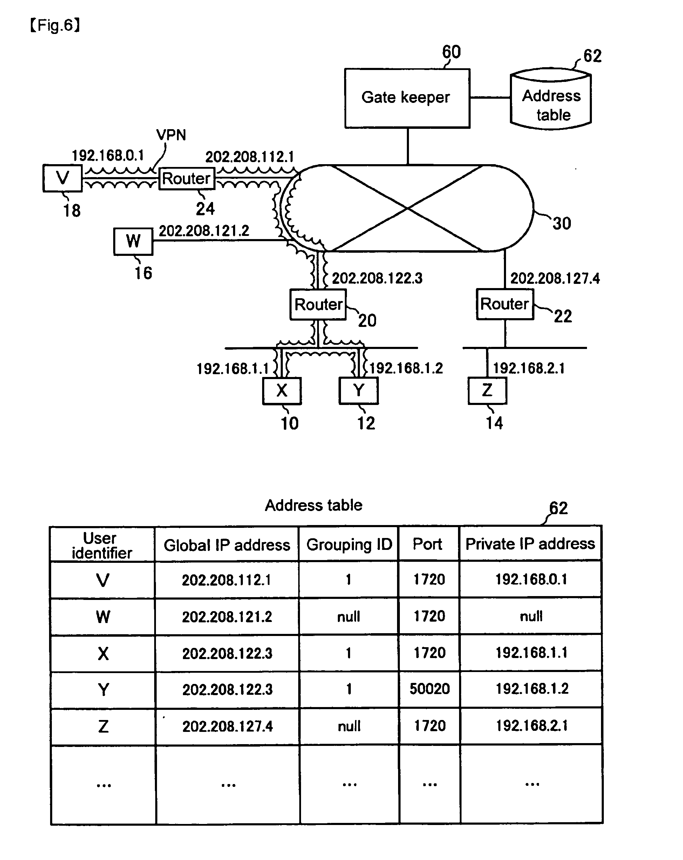

Fig. 6 illustrates the configuration of a communication system including such an address resolution device according to a third embodiment of the present invention. As illustrated, numerals 10, 12, 14, 16, and 18 are user terminals, numerals 20, 22, and 24 are routers, numeral 30 is the Internet, and numeral 60 is a gate keeper serving as the address resolution device according to the third embodiment of the present invention.
The user terminals 10, 12, 14, and 18 are respectively assigned the private addresses as shown in the figure, while the routers 20, 22, and 24 and the terminal 16 are respectively assigned the global addresses shown in the figure.
In this embodiment, the terminal 18 is grouped between the terminals 10, 12 by the VPN.

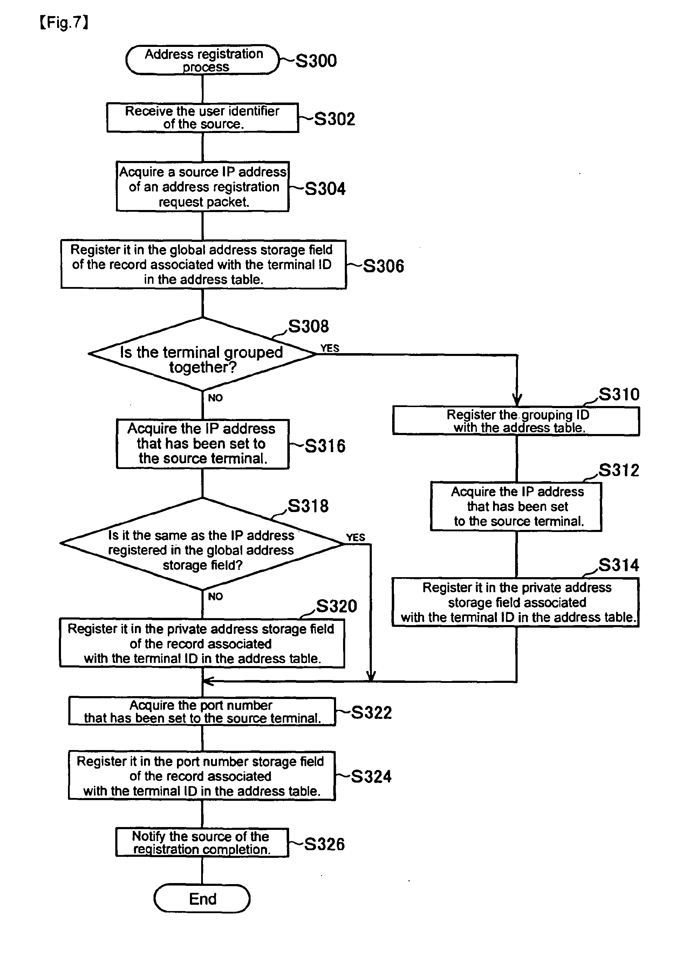

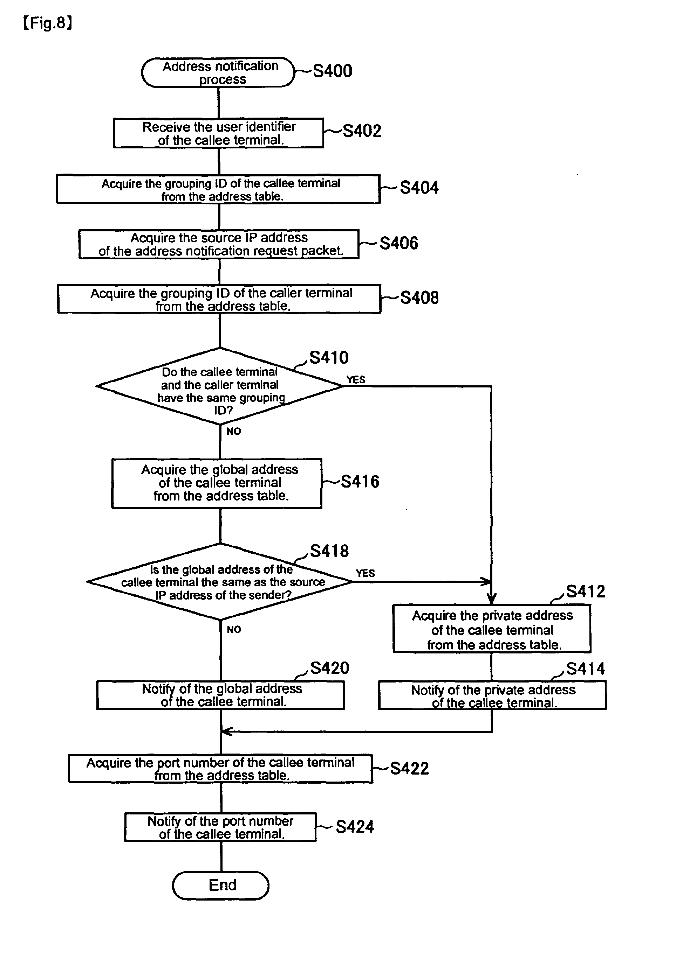

As shown in Fig. 6, in the gate keeper 60 serving as the address resolution device according to this embodiment, the address registration process registers the global address and the private address with an address table 62 as in the first embodiment, and also registers their grouping ID when terminals to be registered are grouped together.
On the other hand, when the global address of the callee terminal is the same as the global address of the caller terminal, the address notification process determines that the callee terminal and the caller terminal are on the same LAN, and then notifies the caller terminal of the private address of the callee terminal, as in the first embodiment. However, even when the global address of the callee terminal is not the same as the global address of the caller terminal, when both the callee terminal and the caller terminal have the same registered grouping ID, then the process determines that the callee terminal and the caller terminal are grouped together by the VPN, and then notifies the caller terminal not of the global address of the callee terminal but of the private address.
To implement the aforementioned function, the gate keeper 60 performs the address registration process shown in Fig. 7 and the address notification process as shown in Fig. 8.

As shown in Fig. 7, the address registration process (S300) in the gate keeper 60 receives the user identifier of the source (S302), acquires the source IP address of the address registration request packet (S304), and then registers the acquired source IP address in the global address storage field of the record associated with the user identifier in the address table 62 (S306), in response to an address registration request from a requesting terminal. Subsequently, when the terminal is grouped together (S308), the process registers the grouping ID of the terminal in the grouping ID storage field of the record associated with the user identifier in the address table 62 (S310). The process also acquires the IP address that has been set (or which has been assigned in DHCP (Dynamic Host Configuration Protocol) or UPnP (Universal Plug and Play)) to the source terminal (S312). The process then registers the acquired IP address in the private address storage field of the record associated with the user identifier in the address table 62 (S314).
On the other hand, when the terminal is not grouped together (S308), the process acquires the IP address that has been set (or which has been assigned in DHCP or UPnP) to the source terminal (S316). If the acquired IP address is not the same as the IP address registered in the global address storage field of the address table 62 (S318), then the process registers the acquired IP address in the private address storage field of the record associated with the user identifier in the address table 62 (S320).
The process then acquires the port number that has been set (or which has been assigned in UPnP or the like) to the source terminal (S322), and then registers the acquired port number in the port number storage field of the record associated with the user identifier in the address table 62 (S324). Subsequently, the process notifies the source of the registration having been completed (S326), and then ends the address registration process.

As shown in Fig. 8, the address notification process (S400) in the gate keeper 60 receives a user identifier of a callee terminal (S402), acquires the grouping ID of the callee terminal from the grouping ID storage field of the record associated with the received user identifier in the address table 62 (S404), in response to an address notification request of a callee terminal from a caller terminal. The process also acquires the source IP address of the address notification request packet (S406), and acquires the grouping ID of the caller terminal from the grouping ID storage field of the record associated with the acquired IP address in the address table 62 (S408). At this stage, when both the callee terminal and the caller terminal have a registered grouping ID, and both the grouping IDs are the same, then the process determines that the callee terminal and the caller terminal are grouped together by the VPN (S410). The process then acquires the private address of the callee terminal from the address table 62 (S412), and notifies the caller terminal of the acquired private address of the callee terminal (S414).
When at least one of the callee terminal and the caller terminal has no registered grouping ID or when both of the terminals have a registered grouping ID but the ID values are not the same, then the process determines that the callee terminal and the caller terminal are not grouped together (S410), and then acquires the global address of the callee terminal from the address table 62 (S416). When the acquired global address of the callee terminal is the same as the previously acquired source IP address of the caller terminal, the process determines that the callee terminal and the caller terminal are connected to the same LAN (S418). The process then acquires the private address of the callee terminal from the address table 62 (S412), and notifies the caller terminal thereof (S414). On the other hand, when the acquired global address of the callee terminal is not the same as the acquired source IP address of the caller terminal, then the process determines that the callee terminal is an external terminal (S418), and notifies the caller terminal of the acquired global address of the callee terminal (S420).
Finally, the process acquires the port number of the callee terminal from the address table 62 (S422) to notify the caller terminal of the acquired port number (S424), and then ends the address notification process.

The foregoing processes allow the caller terminal to set up a call to the callee terminal using the IP address and the port number of the callee terminal notified of in the address notification process. Accordingly, when the callee terminal and the caller terminal are connected to the same LAN or when they are grouped together by the VPN, the process provides communications using the private address of the callee terminal and the port number. It is thus possible to perform communications without burdening the communication network and provide seamless communications to the users without being conscious of whether the callee terminal and the caller terminal are grouped together or not or whether they are connected to the same LAN or not.

In the aforementioned embodiment, the address registration process registers the same one port number irrespective of whether the source terminal is grouped together or not, or whether it has a private address or not. However, this is based on an assumption that the router presets a unique port number to each terminal on the LAN. As described above, when the port number of the private address and the port number of the global address are different from each other, the port numbers may be registered individually so as to be used as appropriate in providing notification of the global address or in providing notification of the private address, in the address notification process.
Furthermore, as described above, the port number may not be registered in the address registration process and only IP address may be notified of in the address notification process. This also provides the effects of the present invention.

In the aforementioned embodiment, the address notification process acquires the source IP address of the address notification request packet as the IP address of the global address of the caller terminal, which is in turn compared with the IP address of the global address of the callee terminal. However, as described above, the caller may send the user identifier of the caller terminal in conjunction with the user identifier of the callee terminal upon making an address notification request. The gate keeper then consults the address table to acquire the IP address of the global address of the caller terminal corresponding to the received user identifier of the caller terminal, and then compares the acquired IP address of the global address of the caller terminal with the acquired IP address of the global address of the callee terminal.

In the aforementioned embodiment, the address registration process registers the private address only when the source terminal is either grouped together or has a private address. However, the private address may also be registered irrespective of whether the source terminal is grouped together. Moreover, as described above, the IP address assigned to the source terminal may also be registered irrespective of whether it is a private address or not.

In the aforementioned embodiment, address resolutions were performed both on terminals connected to the same LAN and on terminals grouped together. However, the address resolution may also be performed only on terminals grouped together. In this case, when the callee terminal and the caller terminal have the same grouping ID, the address notification process may be allowed to provide notification of the private address of the callee terminal registered in the address table, and otherwise provide notification of the global address of the callee terminal.

In the aforementioned embodiment, grouping IDs are registered with the table for registering global address and private addresses. However, other than the table for registering global addresses and private addresses, a grouping table may also be provided to register global addresses grouped together, so that a global address having the same grouping ID assigned in the address registration process is registered with the grouping table. The address notification process may thus consult the grouping table to determine whether the global address of the callee and the global address of the caller are grouped together. Such a grouping table provided separately in this manner would allow for using a router, e.g., having a multi-homing function, which is assigned a plurality of global addresses to select an optimal global address as appropriate upon initiation of communications, thereby providing improved communication flexibility.

As described above, the address resolution device according to the present invention may be placed on the Internet so as to be accessible by each user terminal. This allows the typical address resolution procedure of the communication protocol to be performed as follows. That is, the address resolution device provides notification of the global address of the callee terminal when the callee terminal is an external terminal and not grouped together in response to the address notification request from the caller terminal. On the other hand, when the callee terminal is on the same LAN or when the callee terminal is an external terminal but grouped together, the address resolution device provides notification of the private address of the callee terminal. It is thus possible to perform communications without burdening the network and provide seamless communications to the users without being conscious of whether the callee terminal is an external terminal or on the same LAN or whether it is a grouped terminal or not.

The aforementioned embodiment uses the H.323 protocol as the communication protocol. However, the present invention is not limited to this protocol but may also be applied to other communication protocols such as SIP (Session Initiate Protocol) having the address resolution function as well as to a proprietary communication protocol, which also provides the advantages of the present invention.
Furthermore, in the aforementioned embodiment, the address resolution device according to the present invention is applied to communications using IP telephony and IP video telephony. However, the present invention is not limited to these applications, but may also be applied to any interactive communications between terminals.
Furthermore, in the aforementioned embodiment, the address resolution device according to the present invention is placed on the Internet. However, the present invention is not limited to this configuration, but may also be applied to a system, for example, in which LANs provided at each area are connected to a WAN (Wide Area Network) that is constructed in a business via routers. In this case, the address resolution device may be placed on the WAN to perform address resolutions, where an address on the WAN is a global address and an address on a LAN is a private address.

Now, as another example of communications which uses internal addresses and external addresses properly, a description will be given to E-mail messaging to which the present invention is applied.

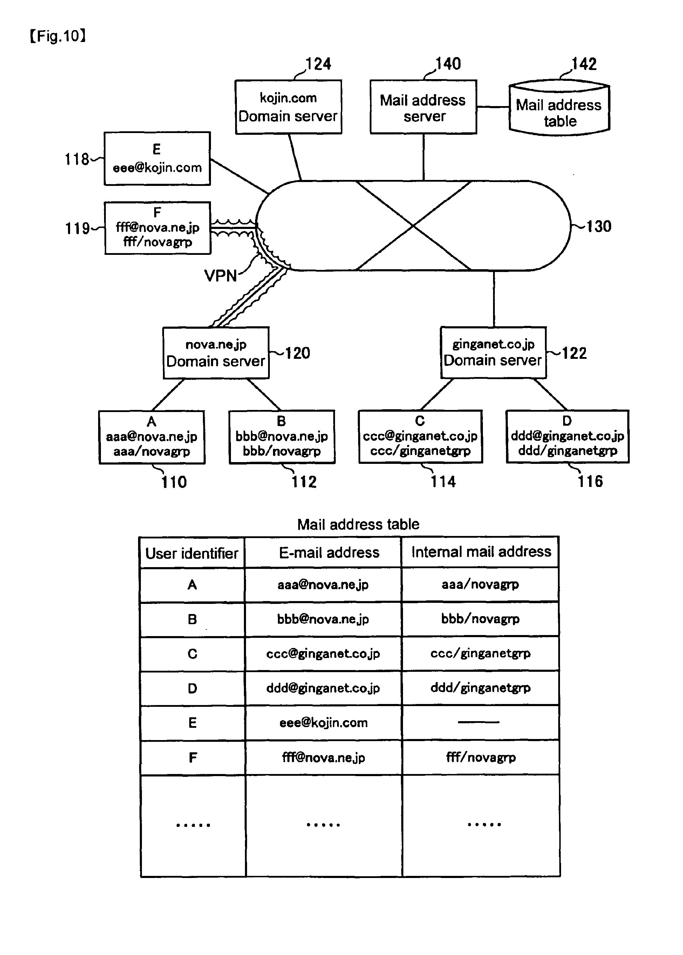

Fig. 10 illustrates the configuration of such a communication system including a mail address server functioning as an address resolution device according to a fourth embodiment of the present invention.
As illustrated, terminals 110, 112, 114, 116, 118, and 119 are used by E-mail users A, B, C, D, E, and F, respectively. Each of the users A and B is a terminal connected to the Internet 130 via a domain server 120 (i.e., nova.ne.jp) in an organization. Each of the users C and D is a terminal connected to the Internet 130 via a domain server 122 (i.e., ginganet.co.jp) in another organization. The user E is a terminal which does not belong to a particular organization and uses a provider's domain server 124 (i.e., kojin.com). The user F is a terminal that uses the domain server 120 (i.e., nova.ne.jp) via a VPN.
As an external mail address for use in communications with external users, each of the terminals used by the users A, B, C, D, E, and F is assigned "aaa@nova.ne.jp", "bbb@nova.ne.jp", "ccc@ginganet.co.jp", "ddd@ginganet.co.jp", "eee@kojin.com", and "fff@nova.ne.jp", respectively. Additionally, as an internal mail address for use in communications with internal users within the organization, each of the terminals used by the users A, B, C, D, and F is assigned "aaa/novagrp", "bbb/novagrp", "ccc/ginganetgrp", "ddd/ginganetgrp", and "fff/novagrp", respectively.
Accordingly, for example, when sending an E-mail to the user C who is outside the organization, the user A utilizes the external mail address. However, when sending an E-mail to the user B who is inside the organization, the user A has to utilize the internal mail address. Suppose that an E-mail is sent to a user within the organization using the external mail address. In this case, the E-mail is conveyed beyond the domain server in the organization into the Internet and then returns to the domain server. This causes the network to be burdened and raises a security problem.

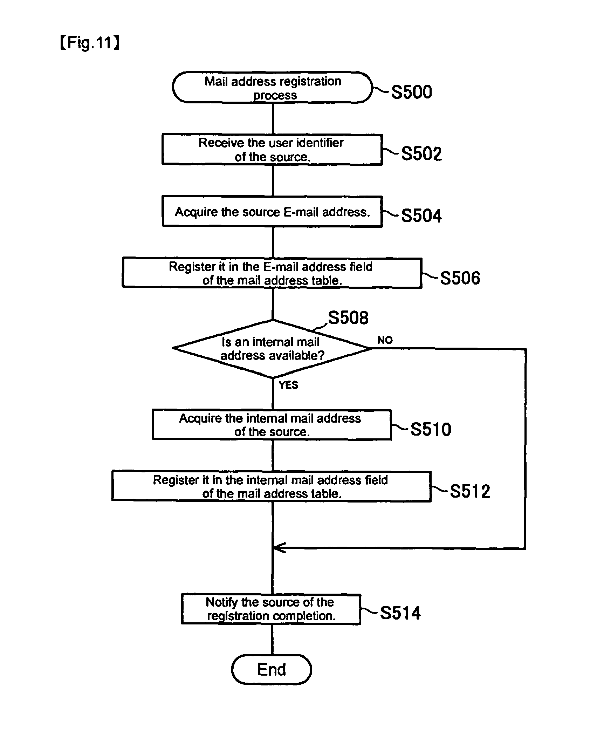

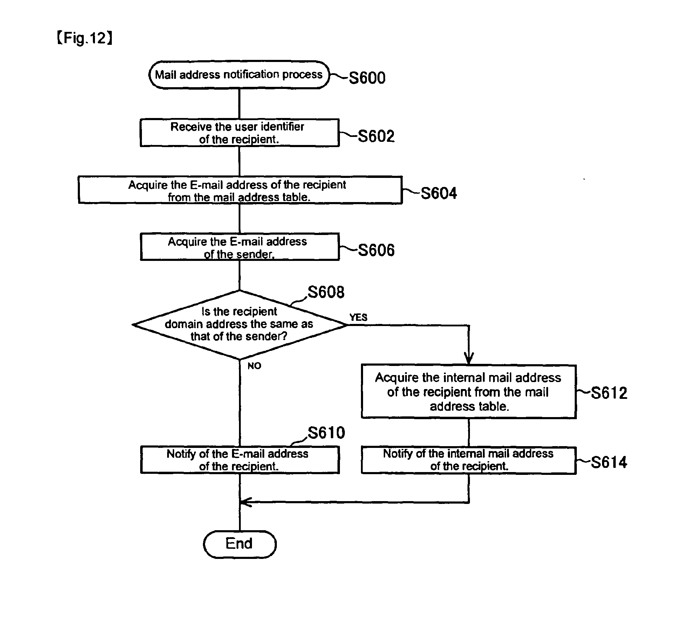

As illustrated, the mail address server 140 functioning as an address resolution device according to this embodiment allows the address registration process to register the external address of each user with a mail address table 142, and the internal mail address therewith when the terminal has the same.
On the other hand, the address notification process provides notification of the external mail address of the recipient when the domain address of the external mail address of the recipient is different from the domain address of the external mail address of the sender, and provides notification of the internal mail address of the recipient when the domain address of the external mail address of the recipient is the same as the domain address of the external mail address of the sender.
In order to implement the aforementioned function, the mail address server 140 performs the address registration process shown in Fig. 11 and the address notification process shown in Fig. 12.

As shown in Fig. 11, the address registration process (S500) in the mail address server 140 receives a user identifier of the sender (S502) and acquires the sender E-mail address (S504). The process then registers the acquired address in the E-mail address storage field of the record associated with the user identifier in the mail address table 142 (S506) in response to an address registration request from a requesting terminal. Subsequently, when the user has an internal mail address (S508), the process acquires the sender internal mail address (S510), and then registers the acquired address in the internal mail address storage field of the record associated with the user identifier in the mail address table 142 (S512). The process then notifies the sender of the registration having been completed (S514), and ends the address registration process.

As shown in Fig. 12, the address notification process (S600) in the mail address server 140 receives a user identifier of the recipient (S602) and acquires the recipient E-mail address from the E-mail address storage field of the record associated with the user identifier in the mail address table 142 (S604), in response to a recipient address notification request from a sender. The process also acquires the E-mail address of the sender (S606) . When the domain address of the E-mail address of the recipient is not the same as that of the E-mail address of the sender (S608), the process notifies the sender of the E-mail address of the recipient (S610). When the domain address of the E-mail address of the recipient is the same as that of the E-mail address of the sender (S608), the process acquires the internal mail address of the recipient from the internal mail address storage field of the record associated with the user identifier in the mail address table 142 (S612). The process then notifies the sender of the internal mail address of the recipient (S614), and ends the address notification process.

The aforementioned processes allow the sender to send an E-mail using the mail address of the recipient notified in the address notification process. Accordingly, the sender uses an E-mail address to send an E-mail to a recipient outside the organization but uses an internal mail address to send an E-mail to a recipient inside the organization. It is possible to prevent any E-mail directed to a recipient inside the organization from being conveyed beyond the domain server, and thus ensure communications to be properly concealed.
Furthermore, such an E-mail messaging system allows users to communicate with each other using the E-mail addresses that are currently registered in the mail address table. Accordingly, even when the workplace of a user is changed and thus his or her mail address is changed, the user can simply register the location with the new terminal to automatically change the mail address. It becomes needless to notify coworkers of the change in mail address, which was necessary until now.

In the aforementioned embodiment, the communication system which allows E-mail communications with the domain server to be performed from an external terminal via the VPN is described. However, in a communication system in which different domain servers are connected to each other over the VPN so as to perform E-mail communications with each other using the internal mail address, the same grouping ID is assigned to those terminals that are connected to their domain servers. The address registration process may register the grouping ID with the mail address table when the sender is grouped together with another user. On the other hand, the address notification process may provide notification of the internal mail address when the recipient grouping ID in the mail address table is the same as the sender grouping ID. This also provides the advantages of the present invention.
Even in such E-mail communications, the address notification process may receive the user identifier of the sender in conjunction with the user identifier of the recipient to acquire the E-mail address and the grouping ID of the sender using the user identifier of the sender from the mail address table.

As another example of communications which uses internal addresses and external addresses properly, a description will be given to typical analog telephony or ISDN telephony to which the present invention is applied.

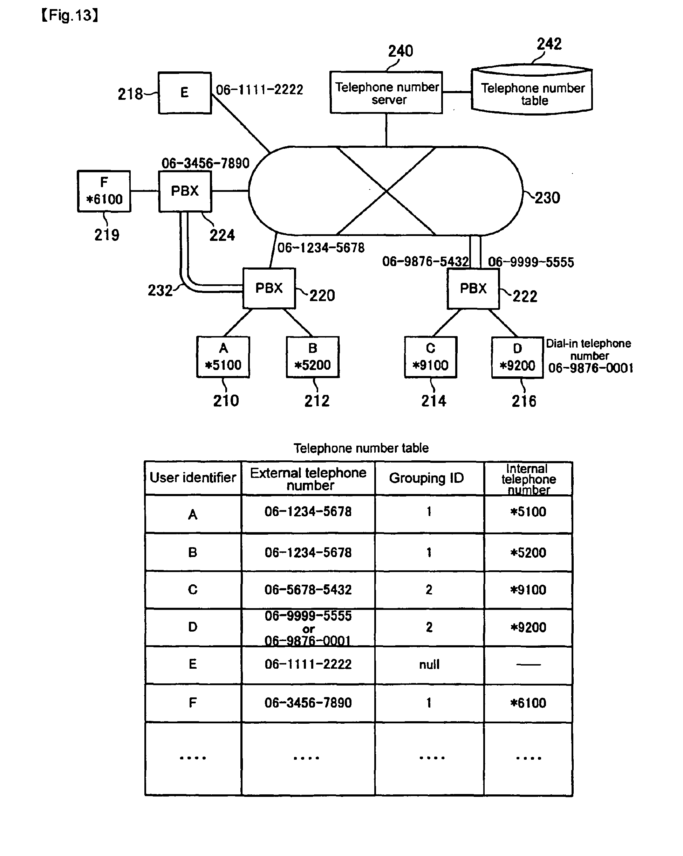

Fig. 13 illustrates the configuration of such a communication system employing a telephone number server acting as an address resolution device according to a fifth embodiment of the present invention.

As illustrated, telephone terminals 210, 212, 214, 216, 218, and 219 are used by users A, B, C, D, E, and F, respectively. The telephone terminals used by the users A and B are connected to the public telephone line 230 via a PBX 220 located within an organization. The telephone terminals used by the users C and D are connected to the public telephone line 230 via a PBX 222 located within another organization. The telephone terminal used by the user E is connected directly to the public telephone line 230. The telephone terminal used by the user F is connected to the public telephone line 230 via a PBX 224 located within the other organization. The PBX 220 and the PBX 224 are connected to each other by a dedicated telephone line 232, so that the telephone terminals used by the users A, B, and F are grouped together to enable communications with each other as internal telephones.
The telephone terminals used by the users A, B, C, D, and F are assigned internal telephone numbers "*5100", "*5200", "*9100", "*9200", and "*6100", respectively. Additionally, the PBX 220 is assigned an external telephone number "06-1234-5678", and the PBX 222 is assigned an external telephone number "06-9876-5432" and "06-9999-5555". The PBX 224 is assigned an external telephone number "06-3456-7890", and the telephone terminal used by the user E is assigned an external telephone number "06-1111-2222". The telephone terminal used by the user D can be dialed up directly through an outside line, and is assigned a dedicated external telephone number "06-9876-0001".

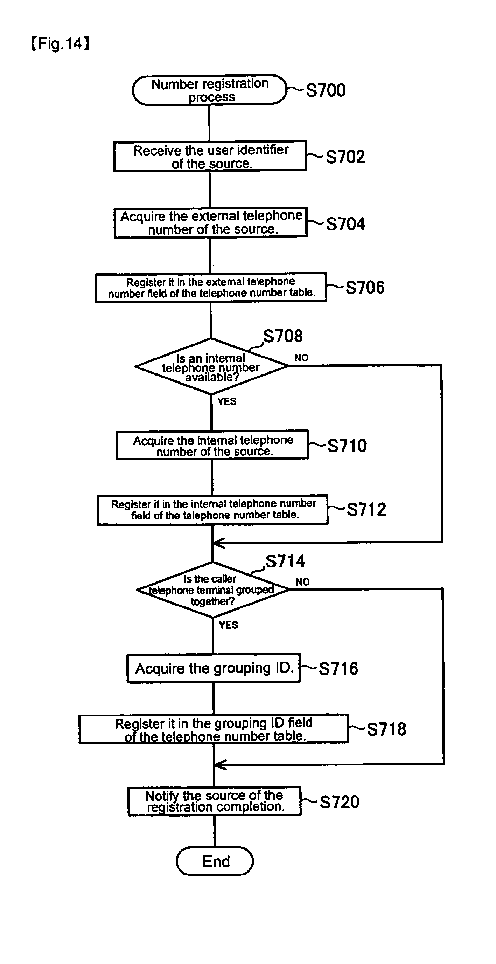

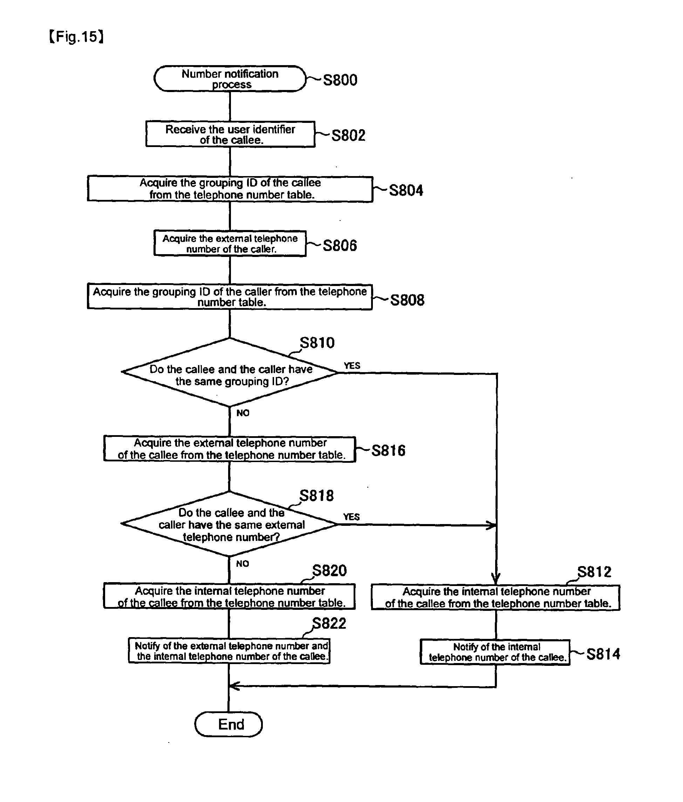

As illustrated, a telephone number server 240 serving as an address resolution device according to this embodiment allows the address registration process to register external telephone numbers and internal telephone numbers with a telephone number table 242. Furthermore, a grouping ID is registered with the telephone terminals grouped together by the dedicated telephone line 232, while a grouping ID is also registered with a telephone terminal that is assigned a plurality of external telephone numbers. In the telephone number table, two external telephone numbers are entered in the external telephone number field of the record associated with the user D. This is because either the external telephone number of the PBX 222 or the direct telephone number of the telephone terminal 216 may be notified of when the user D attempts to register the address of the telephone terminal 216.
On the other hand, in the address notification process, when the external telephone number of a callee and the external telephone number of a caller are different from each other and when they are not grouped together or they have a different grouping ID, the external telephone number of the callee is notified of. However, when the callee and caller have the same external telephone number or when they have different external telephone numbers but the same grouping ID, the process determines that the callee telephone terminal is within the same organization, and thus, provides notification of the internal telephone number.
In order to implement the aforementioned function, the telephone number server 240 performs the address registration process shown in Fig. 14 and the address notification process shown in Fig. 15.

As shown in Fig. 14, the address registration process (S700) in the telephone number server 240 receives the user identifier of the caller (S702) and acquires the external telephone number of the caller (S704). The process then registers the acquired telephone number in the external telephone number storage field of the record associated with the user identifier in the telephone number table 242 (S706) in response to an address registration request from a requesting terminal. Subsequently, when the user has an internal telephone number (S708), the process acquires the internal telephone number of the caller (S710), and registers the acquired telephone number in the internal telephone number storage field of the record associated with the user identifier in the telephone number table 242 (S712). On the other hand, when the caller telephone terminal is grouped together (S714), the process acquires the grouping ID (S716), and registers the acquired telephone number in the grouping ID storage field of the record associated with the user identifier in the telephone number table 242 (S718). Then, the process notifies the caller of the registration having been completed (S720), and ends the address registration process.

As shown in Fig. 15, the address notification process (S800) in the telephone number server 240 receives a user identifier of a callee (S802) and acquires the grouping ID of the callee from the grouping ID storage field of the record associated with the user identifier in the telephone number table 242 (S804), in response to a callee address notification request from a caller. The process also acquires the external telephone number of the caller (S806), and then acquires the grouping ID of the caller from the grouping ID storage field of the record associated with the external telephone number of the caller in the telephone number table 242 (S808). When the callee and the caller have the same grouping ID (S810), the process acquires the internal telephone number of the callee from the internal telephone number storage field of the record associated with the user identifier in the telephone number table 242 (S812) and notifies the caller of the internal telephone number of the callee (S814). On the other hand, when the callee and the caller do not have the same grouping ID, the process acquires the external telephone number of the callee from the external telephone number storage field of the record associated with the user identifier in the telephone number table 242 (S816). When the callee and the caller have the same external telephone number (S818), the process proceeds to S812 to notify the caller of the internal telephone number of the callee. On the other hand, when the external telephone number of the callee and the external telephone number of the caller are not the same and when there is an internal telephone number registered in the internal telephone number storage field of the record associated with the user identifier in the telephone number table 242, the process acquires the internal telephone number of the callee (S820). The process then notifies the caller of the external telephone number of the callee and the acquired internal telephone number (S822), and ends the address notification process.

The aforementioned processes allow the caller to set up a call to the called party using the telephone number of the callee notified of in the address notification process. Accordingly, the caller uses the external telephone number to call the callee located outside the organization, but uses the internal telephone number to call the callee located within the organization. It is possible to prevent calls within the organization from being conveyed beyond the PBX, and thus, ensure communications to be properly concealed.
Furthermore, such a telephone communication system allows users to communicate with each other using the telephone numbers that are currently registered in the telephone number table. Accordingly, even when the workplace of a user is changed, and thus, the telephone number is changed, the user can simply register the location with the new telephone terminal to automatically change the telephone number. It becomes needless to notify coworkers of the change in telephone number, which was necessary until now.
To provide telephone calls using such a telephone number server, each telephone terminal has to access the telephone number server at the time of address registration and address notification. However, use of an ISDN telephone network would provide reduced communication costs by using the ISDN control channel (D channel) for access to the telephone number server.

In the aforementioned embodiment, a grouping ID field is provided on one telephone number table in which the grouping ID of each user is registered. However, a grouping table for registering external telephone numbers grouped together may be separately provided, so that the address registration process registers external telephone numbers assigned the same grouping ID with the grouping table. Additionally, the address notification process may consult the grouping table to determine whether the callee external telephone number and the caller external telephone number are grouped together. By providing a grouping table separately as described above, when a PBX is assigned a plurality of external telephone numbers as in this embodiment, or when a telephone terminal has a direct external telephone number, even if the external telephone number registered at the address registration is busy at the time of address notification, the separate provision of the grouping table makes it possible to select another external telephone number having the same grouping ID, thereby improving the flexibility of communications.
Even in such telephone communications, the address notification process may receive the user identifier of the caller in conjunction with the user identifier of the callee to acquire the external telephone number of the caller and the grouping ID using the user identifier of the caller from the telephone number table.

### [INDUSTRIAL APPLICABILITY]

In communications using IP telephony, IP video telephony, E-mail, analog telephony, ISDN telephony or the suitable technology in which a called terminal is a local terminal or a grouped terminal, the present invention provides seamless communications to users without burdening the communication system and without being conscious of whether an opposing party is a local terminal or not or whether the opposing party is a grouped terminal or not.
It is to be understood by those skilled in the art that the present invention is not limited to the aforementioned specific embodiments, and within the scope of the present invention, the components described in each embodiment may be exchanged as appropriate, new additional components may be incorporated, or a portion of the components may be eliminated.

## Claims

1. An address resolution device comprising:
address registration means for registering an address assigned to a user with an address table upon reception of an address registration request from the user; and
address notification means for providing notification of a callee address registered with said address table upon reception of an address notification request from a caller; wherein
said address registration means includes a function for registering an internal address of the user with said address table in conjunction with an external address of said user in response to the address registration request from the user; and
said address notification means includes a function for providing notification of the external address of the callee registered with said address table when the external address of the callee registered with said address table is different from the external address of the caller, and a function for providing notification of the internal address of the callee registered with the address table when the external address of the callee registered with the address table is the same as the external address of the caller, in response to the address notification request from the caller.

2. The address resolution device according to claim 1, wherein
said address registration means includes a function for receiving a user identifier of a source, a function for acquiring a source address, a function for registering said acquired source address with said address table as an external address corresponding to said received user identifier of the source, a function for receiving a source terminal address, and a function for registering said received source terminal address with said address table as an internal address corresponding to said received user identifier of the source; and
said address notification means includes a function for receiving a user identifier of a callee terminal, a function for acquiring the external address of the callee terminal corresponding to said received user identifier of the callee terminal by consulting said address table, a function for acquiring a source address, a function for providing notification of said acquired external address of the callee terminal when said acquired external address of the callee terminal is different from said acquired source address, and a function for acquiring and providing notification of the internal address of the callee terminal corresponding to said received user identifier of the callee terminal by consulting said address table when said acquired external address of the callee terminal is the same as said acquired source address.

3. The address resolution device according to claim 1, wherein
said address registration means includes a function for receiving a user identifier of a source, a function for acquiring a source address, a function for registering said acquired source address with said address table as an external address corresponding to said received user identifier of the source, a function for receiving a source terminal address, and a function for registering said received source terminal address with said address table as an internal address corresponding to said received user identifier of the source; and
said address notification means includes a function for receiving a user identifier of a callee terminal, a function for acquiring the external address of the callee terminal corresponding to said received user identifier of the callee terminal by consulting said address table, a function for receiving the user identifier of the caller terminal, a function for acquiring the external address of the caller terminal corresponding to said received user identifier of the caller terminal by consulting said address table, a function for providing notification of said acquired external address of the callee terminal when said acquired external address of the callee terminal is different from said acquired external address of the caller terminal, and a function for acquiring and providing notification of the internal address of the callee terminal corresponding to said received user identifier of the callee terminal by consulting said address table when said acquired external address of the callee terminal is the same as said acquired external address of the caller terminal.

4. The address resolution device according to claim 2 or 3, wherein
in said address registration means, said function for acquiring a source address includes a function for acquiring a source port number, and said function for registering the source address with the address table as an external address includes a function for registering said acquired source port number; and
in said address notification means, said function for acquiring the external address of the callee terminal includes a function for acquiring the corresponding port number by consulting said address table, and said function for providing notification of the external address of the callee terminal includes a function for providing notification of said acquired corresponding port number.

5. The address resolution device according to any of claims 2 to 4, wherein said address registration means includes a function for registering said received source terminal address with said address table as an internal address when said received source terminal address is different from said acquired source address.

6. The address resolution device according to any of claims 1 to 5, wherein
said address registration means includes a function for registering a grouping ID with said address table when said user is grouped together with another user in response to the address registration request from the user; and
said address notification means includes a function for providing notification of said internal address of the caller registered with said address table when the callee and the caller have the same grouping ID registered with said address table in response to the address notification request from the caller.

7. The address resolution device according to any of claims 1 to 6, wherein said address notification means includes a function for providing notification of a registered entry in the address table in response to a request from a terminal.

8. An address resolution method comprising:
an address registration step of registering an address assigned to a user with an address table upon reception of an address registration request from the user; and
an address notification step of providing notification of a callee address registered with said address table upon reception of an address notification request from a caller; wherein
said address registration step includes a step of registering an internal address of said user with said address table in conjunction with an external address of said user in response to the address registration request from the user; and
said address notification step includes a step of providing notification of the external address of the callee registered with said address table when the external address of the callee registered with said address table is different from the external address of the caller, and a step of providing notification of the internal address of the callee registered with said address table when the external address of the callee registered with the address table is the same as the external address of the caller, in response to the address notification request from the caller.

9. The address resolution method according to claim 8, wherein
said address registration step includes a step of receiving a user identifier of a source, a step of acquiring a source address, a step of registering said acquired source address with said address table as an external address corresponding to said received user identifier of the source, a step of receiving a source terminal address, and a step of registering said received source terminal address with said address table as an internal address corresponding to said received user identifier of the source; and
said address notification step includes a step of receiving a user identifier of a callee terminal, a step of acquiring the external address of the callee terminal corresponding to said received user identifier of the callee terminal by consulting said address table, a step of acquiring a source address, a step of providing notification of said acquired external address of the callee terminal when said acquired external address of the callee terminal is different from said acquired source address, and a step of acquiring and providing notification of the internal address of the callee terminal corresponding to said received user identifier of the callee terminal by consulting said address table when said acquired external address of the callee terminal is the same as said acquired source address.

10. The address resolution method according to claim 8, wherein:
said address registration step includes a step of receiving a user identifier of a source, a step of acquiring a source address, a step of registering said acquired source address with said address table as an external address corresponding to said received user identifier of the source, a step of receiving a source terminal address, and a step of registering said received source terminal address with said address table as an internal address corresponding to said received user identifier of the source; and
said address notification step includes a step of a receiving a user identifier of a callee terminal, a step of acquiring the external address of the callee terminal corresponding to said received user identifier of the callee terminal by consulting said address table, a step of receiving the user identifier of the caller terminal, a step of acquiring the external address of the caller terminal corresponding to said received user identifier of the caller terminal by consulting said address table, a step of providing notification of said acquired external address of the callee terminal when said acquired external address of the callee terminal is different from said acquired external address of the caller terminal, and a step of acquiring and providing notification of the internal address of the callee terminal corresponding to said received user identifier of the callee terminal by consulting said address table when said acquired external address of the callee terminal is the same as said acquired external address of the caller terminal.

11. The address resolution method according to claim 9 or 10, wherein
in said address registration step, said step of acquiring a source address includes a step of acquiring a source port number, and said step of registering the source address with the address table as an external address includes a step of registering said acquired source port number; and
in said address notification step, said step of acquiring the external address of the callee terminal includes a step of acquiring the corresponding port number by consulting said address table, and said step of providing notification of the external address of the callee terminal includes a step of providing notification of said acquired corresponding port number.

12. The address resolution method according to any of claims 8 to 11, wherein
said address registration step includes a step of registering a grouping ID with said address table when the user is grouped together with another user in response to the address registration request from the user; and
said address notification step includes a step of providing notification of the internal address of the callee registered with said address table when the callee and the caller have the same grouping ID registered with said address table in response to the address notification request from the caller.

13. A communication system comprising:
an address resolution device provided in a communication network and arranged to communicate between terminals connected to the communication network; wherein
said terminals include means for sending a user identifier of a source and a source terminal address to said address resolution device to request an address registration;
said address resolution device includes an address table for registering addresses of the terminals connected to the network, and the address resolution device includes means for receiving a user identifier of the source transmitted from the terminals upon reception of an address registration request from the terminals, means for acquiring the source terminal address, means for registering said acquired source terminal address with said address table as an external address corresponding to said received user identifier of the source, means for receiving the source terminal address transmitted from the terminals, and means for registering said received source terminal address with said address table as an internal address corresponding to said received user identifier;
said terminals include means for sending a user identifier of a callee terminal to said address resolution device to request an address notification; and
said address resolution device includes means for receiving the user identifier of the callee terminal transmitted from said terminals upon reception of the address notification request from said terminals, means for acquiring an external address of the callee terminal corresponding to said received user identifier of the callee terminal by consulting said address table, means for acquiring the source terminal address, means for providing notification of said acquired external address of the callee terminal when said acquired terminal address of the callee terminal is different from said acquired source address, and means for acquiring and providing notification of the internal address of the callee terminal corresponding to said received user identifier of the callee terminal by consulting said address table when said acquired external address of the callee terminal is the same as said acquired source address.

14. A communication system comprising:
an address resolution device provided in a communication network and arranged to communicate between terminals connected to the communication network; wherein
said terminals include means for sending a user identifier of a source and a source terminal address to said address resolution device to request an address registration;
said address resolution device includes an address table for registering addresses of the terminals connected to the network, and said address resolution device includes means for receiving the user identifier of the source transmitted from said terminals upon reception of an address registration request from said terminals, means for acquiring the source terminal address, means for registering said acquired source address with said address table as an external address corresponding to said received user identifier of the source, means for receiving the source terminal address transmitted from said terminals, and means for registering said received source terminal address with said address table as an internal address corresponding to the received user identifier;
said terminal includes means for sending a user identifier of a callee terminal and the user identifier of the caller terminal to said address resolution device to request an address notification; and
said address resolution device includes means for receiving the user identifier of the callee terminal transmitted from said terminals upon reception of an address notification request from said terminals, means for acquiring an external address of the callee terminal corresponding to said received user identifier of the callee terminal by consulting said address table, means for receiving the user identifier of the caller terminal transmitted from said terminals, means for acquiring an external address of the caller terminal corresponding to the received user identifier of the caller terminal by consulting said address table, means for providing notification of said acquired external address of the callee terminal when said acquired external address of the callee terminal is different from said acquired external address of the caller terminal, and means for acquiring and providing notification of the internal address of the callee terminal corresponding to said received user identifier of the callee terminal by consulting said address table when said acquired external address of the callee terminal is the same as said acquired external address of the caller terminal.

15. The communication system according to claim 13 or 14, wherein
in said address resolution device, said means for acquiring a source address includes means for acquiring a source port number, and said means for registering the source address with the address table as an external address includes means for registering said acquired source port number; and
said means for acquiring the external address of the callee terminal includes means for acquiring the corresponding port number by consulting said address table, and said means for providing notification of the external address of the callee terminal includes means for providing notification of said acquired corresponding port number.

16. The communication system according to any of claims 13 to 15,
wherein said address resolution device includes means for registering a grouping ID with said address table when said terminal is grouped together with another terminal in response to the address registration request from said terminal; and
means for providing notification of the internal address of said callee terminal registered with said address table when both the callee terminal and the caller terminal have the same grouping ID registered with said address table in response to the address notification request from said terminal.

17. An address resolution device comprising address registration means for registering a mail address assigned to a user with an address table upon reception of an address registration request from the user, and address notification means for notifying of a recipient mail address registered with the address table upon reception of an address notification request from a sender; wherein
said address registration means includes a function for registering an internal mail address of said user with said address table in conjunction with an E-mail address of said user in response to the address registration request from the user; and
said address notification means includes a function for providing notification of the E-mail address of the recipient registered with said address table when the domain address of the E-mail address of the recipient registered with said address table is different from the domain address of the E-mail address of the sender, and a function for providing notification of the internal address of the recipient registered with said address table when the domain address of the E-mail address of the recipient registered with said address table is the same as the domain address of the E-mail address of the sender, in response to the address notification request from the sender.

18. An address resolution device comprising:
address registration means for registering a telephone number assigned to a user with an address table upon reception of an address registration request from the user; and
address notification means for providing notification of a callee telephone number registered with said address table upon reception of an address notification request from a caller; wherein
said address registration means includes a function for registering an internal telephone number of said user with said address table in conjunction with an external telephone number of said user in response to the address registration request from the user; and
said address notification means includes a function for providing notification of the external telephone number of the callee and the internal telephone number of the callee registered with said address table when the external telephone number of the callee registered with said address table is different from the external telephone number of the caller, and a function for providing notification of the internal telephone number of the callee registered with said address table when the external telephone number of the callee registered with said address table is the same as the external telephone number of the caller, in response to the address notification request from the caller.
